# EUROPEAN PATENT SPECIFICATION

(11) **EP 1 730 231 B1**
(45) Date of publication and mention of the grant of the patent: **13.06.2012**
(21) Application number: 05731302.5
(22) Date of filing: 21.03.2005
(51) Int. Cl.: C08L 23/14

(54) **FLEXIBLE PROPYLENE COPOLYMER COMPOSITIONS HAVING A HIGH TRANSPARENCY**
FLEXIBLE PROPYLENCOPOLYMERZUSAMMENSETZUNGEN MIT HOHER TRANSPARENZ
COMPOSITIONS DE COPOLYMERE DE PROPYLENE SOUPLE TRES TRANSPARENT

(30) Priority: 24.03.2004 EP 04101224; 17.09.2004 US 610785 P
(43) Date of publication of application: 13.12.2006
(73) Proprietor: Basell Polyolefine GmbH, 50389 Wesseling (DE)
(72) Inventor: FUCHS, Alexander, I-44100 Ferrara (IT); SARTORI, Gabriella, I-44100 Ferrara (IT); Kautz, Gerhard, 67281 Bissersheim (DE); NICKLES, Ralf, 63863 Eschau (DE); BUGADA, Daniele, C., Newark, DE 19711 (US); NAGARAJAN, Ganesh, Newark, DE 19711 (US)
(74) Representative: Sacco, Marco
(86) International application number: PCT/EP2005/003045
(87) International publication number: WO 2005/090467

(56) References cited:
- EP-A- 0 889 089
- WO-A-01/48034
- WO-A-02/070572
- WO-A-03/106523

## Description

The invention relates to propylene copolymer compositions, to a process for producing the propylene copolymer compositions, to the use of the propylene copolymer compositions of the present invention for producing fibers, films or moldings and also to fibers, films or moldings comprising the propylene copolymer compositions of the present invention.

Polymers of propylene can be processed to form shaped bodies which have advantageous mechanical properties, especially a high hardness, stiffness and shape stability. Consumer articles made of propylene polymers are used in a wide range of applications, e.g. as plastic containers, as household or office articles, toys or laboratory requisites. However, the products known from the prior art are not satisfactory for many applications, since a combination of low stiffness with good transparency is frequently desired.

It is known that multiphase propylene copolymers having a good impact toughness and a decreasing stiffness can be prepared by means of Ziegler-Natta catalyst systems in a multistage polymerization reaction. However, the incorporation of ethylene-propylene copolymers having a high proportion of ethylene into a polymer matrix makes the multiphase propylene copolymer turbid. Poor miscibility of the flexible phase with the polymer matrix leads to a separation of the phases and thus to turbidity and to poor transparency values of the heterogeneous copolymer. Furthermore, the ethylene-propylene rubber prepared by means of conventional Ziegler-Natta catalysts also has a very inhomogeneous composition.

It is also known that multiphase copolymers of propylene can be prepared using metallocene catalyst systems.

WO 94/28042 and EP-A 1 002 814 disclose multiphase copolymers of propylene. However, no propylene copolymer compositions having a propylene copolymer matrix are described.

WO 01/48034 relates to metallocene compounds by means of which propylene copolymers having a high molar mass and a high copolymerized ethylene content can be obtained under industrially relevant polymerization conditions. Multiphase propylene copolymers having a high stiffness/impact toughness level are obtainable in this way. However, no flexible propylene copolymer compositions having a high transparency are described.

WO 03/106523 relates to a flexible propylene composition obtained by a multistage process. However this document does not describes the particular balance of properties of the composition of the present invention, due to the particular values of comonomer content of said composition, in particular this document does not describes an ethylene content lower than 1 % in the propylene copolymer A).

Further, it is known that propylene polymer films can be produced from random copolymer or heterophasic polymer compositions. However, the properties of these films limit their usefulness across a broad range of film applications requiring diverse properties. For example, applications involving packaging and cooking food typically require good temperature resistance, and low hexane extractable and xylene soluble values. Medical film applications, such as intravenous (IV) bags, require good clarity. Personal care and hygiene applications, such as diapers and sanitary napkins, need to be soft and have superior vapor transmission properties. Good heat sealability characteristics are also necessary. Particular polymer systems can provide some of these requirements. However, a need still exists for films with a balance of properties that can span the range of applications.

It is an object of the present invention to overcome the above-described disadvantages of the prior art and to provide propylene copolymer compositions which have a well balanced properties of modulus, melting point and at the same time a good transparency. Furthermore, they should have a low proportion of n-hexane-soluble material, a high impact toughness, in particular at low temperatures, good stress whitening behavior and a shrinkage behavior corresponding to propylene polymers. It is a further object of the present invention to provide polymer films that can be used in a variety of applications and which possess excellent transparency and toughness, as well as having good vapor transmission, hot tack and heat sealability properties, high temperature resistance and low hexane extractables and xylene insolubles values. It has unexpectedly been found that the propylene copolymer compositions of the invention and films thereof satisfy these required needs.

### Summary of the Invention

In one embodiment, the present invention relates to a propylene copolymer composition comprising:
A) from 50% to 80% by weight of a propylene copolymer containing from 0.05 to 0.99% by weight of an alpha olefins having from 2 to 10 carbon atoms other than propylene; and
B) from 20% to 50% by weight of one propylene copolymer containing from 7.01% to 9.99%, preferably about 8.0% to about 9.6% by weight of an alpha olefins having from 2 to 10 carbon atoms other than propylene;
said propylene copolymer composition having the following characteristics:
(i) MFR (230°C/2,16 kg) comprised between 1 and 20 g/10 min;
(ii) tensile E modulus comprised between 400 and 800 MPa.

In another embodiment, the present invention relates to a film produced from a propylene copolymer composition comprising
A) from 50% to 80% by weight of a propylene copolymer containing from 0.05 to 0.99% by weight of alpha olefins having from 2 to 10 carbon atoms other than propylene; and
B) from 20% to 50% by weight of a propylene copolymer containing from 7.01% to 9.99% by weight of alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of 400 to 800 MPa; and wherein the film has a haze less than 10.0% and a dart impact greater than 150 gms for a 1 mil thickness of film.

### Brief Description of the Drawings

Figure 1 shows the hot tack curves for Example 1 and Comparative Examples 2-7.
Figure 2 shows the heat sealability curves for Example 1 and Comparative Examples 2-7.

### Detailed Description of the Invention

The propylene polymer composition of the invention comprises:
A) from 50% to 80% by weight of a propylene copolymer containing from 0.05 to 0.99% by weight of an alpha olefin having from 2 to 10 carbon atoms other than propylene; and
B) from 20% to 50% by weight of a propylene copolymer containing from 7.01% to 9.99 % by weight, more preferably 8.0% to 9.6% by weight of alpha olefin having from 2 to 10 carbon atoms other than propylene;
said propylene copolymer composition having the following characteristics:
(i) MFR (230°C/2.16 kg) comprised between 1 and 20 g/10min, preferably between 6 and 12 g/10min;
(ii) Tensile E modulus comprised between 400 and 800 MPa, preferably between 550 and 750 MPa (ISO 527-2:1993).

Preferably the propylene copolymer composition has the melting point, measured as described below, comprised between 143°C and 150°C; more preferably comprised between 145°C and 150°C.

Preferably the propylene copolymer composition has haze measured according to ASTM D 1003 comprised between 25% and 40%; preferably between 25% and 35%; more preferably between 31% and 35%, wherein the haze is measured on the product as such without the adding of clarifying agents.

The propylene copolymer composition of the present invention is preferably obtainable by means of a two-stage or multistage polymerization using a catalyst system based on metallocene compounds.

In the multiphase propylene copolymer compositions of the present invention, the propylene copolymer A usually forms a three-dimensionally coherent phase in which the phase of the propylene copolymer B is embedded. Such a coherent phase in which one or more other phases are dispersed is frequently referred to as the matrix. The matrix usually also makes up the major proportion by weight of the polymer composition.

In the multiphase propylene copolymer compositions of the present invention, the propylene copolymer B is generally dispersed in finely divided form in the matrix. Furthermore, the diameter of the then isolated domains of the propylene copolymer B is usually from 100 nm to 1000 nm. Preference is given to a geometry with a length in the range from 100 nm to 1000 nm and a thickness in the range from 100 to 300 nm. The determination of the geometry of the individual phases of the propylene copolymer compositions can be carried out, for example, by evaluation of contrasted transmission electron micrographs (TEMs).

To prepare the propylene polymers present in the propylene copolymer compositions of the present invention, at least one alpha olefin is used as comonomer in addition to propylene. Preferred alpha-olefins are linear C₂-C₁₀-1-alkenes. Particularly preferred olefins are ethylene and linear C₄-C₁₀-1-alkenes such as 1-butene, 1-pentene, 1-hexene, 1-heptene, 1-octene, 1-decene, in particular ethylene and/or 1-butene.

The propylene copolymer A present in the propylene copolymer compositions of the present invention is a propylene copolymer containing from 0.05 to 0.99% by weight of alpha-olefins other than propylene. Preferred propylene copolymers contain from 0.5 to 0.90% by weight, in particular from 0.5 to 0.8% by weight, of alpha-olefins other than propylene. As comonomers, preference is given to using ethylene or linear C₄-C₁₀- 1-alkenes or mixtures thereof, in particular ethylene and/or 1-butene.

The component B present in the propylene copolymer compositions of the present invention is made up of at least one propylene copolymer containing: from 7.01 % to 9.99%, preferably, 8.0% to 9.6% by weight of alpha-olefins other than propylene. Preferred comonomers are ethylene or linear C₄-C₁₀-1-alkenes or mixtures thereof, in particular ethylene and/or 1-butene. In a further, preferred embodiment, monomers containing at least two double bonds, e.g. 1,7-octadiene or 1,9-decadiene, are additionally used.

The composition of the present invention contains from 50% to 80% by weight of the copolymer A; preferably from 60% to 75% by weight; more preferably from 65% to 72% by weight. The composition object of the present invention contains from 20% to 50% by weight of the propylene copolymer B; preferably from 25% to 40% by weight; more preferably from 28% to 35% by weight.

The proportion of n-hexane-soluble material in the propylene copolymer compositions of the present invention is preferably ≤2.6% by weight, particularly preferably ≤2.0 by weight and in particular ≤1.0% by weight. According to the present invention, the determination of the proportion of n-hexane-soluble material is carried out by a modified FDA method by extraction of about 2.5 g of material with one liter of n-hexane at 50°C. According to the FDA method, an extruded film is used as sample. However, in the case of the propylene copolymer compositions of the present invention, the same values for the proportion of n-hexane-soluble material are obtained using samples composed of granulated material or a granulated material which has been milled to a mean particle diameter of, for example, 100 µm.

Furthermore, the propylene copolymer compositions of the present invention preferably have a haze value comprised between 25% and 40%, preferably between 25% and 35%; more preferably between 31% and 35%, based on a film thickness of the propylene copolymer composition of 1 mm, measured without the aid of clarifying agents according to ASTM D 1003. The haze value is a measure of the turbidity of the material and is thus a parameter which characterizes the transparency of the propylene copolymer compositions. The lower the haze value, the higher the transparency. Furthermore, the haze value is also dependent on the film thickness. The thinner the layer, the lower the haze value. For example, a 1 mil (25.4 µm) thickness of film produced with the compositions of the invention preferably has a haze value of less than about 10%, more preferably less than about 5%, and most preferably less than about 2%, measured without the aid of clarifying agents.

Because the haze is measured on the polymer composition as such without the adding of clarifying agents, lower values can be obtained simply by adding clarifying agents known in the art such as sodium benzoate, aluminum tert-butylbenzoate, dibenzylidenesorbitol or its C₁-C₈-alkyl-substituted derivatives such as methyldibenzylidenesorbitol, 3,4-dimethylbenzylidensorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate.

Preferred propylene copolymer compositions of the present invention have a tensile E modulus determined in a tensile test in accordance with ISO 527-2:1993 in the range from 400 to 800 MPa, preferably from 550 MPa to 750 MPa and in particular in the range from 600 MPa to 700 MPa.

Propylene polymers are tough materials at room temperature, i.e. plastic deformation occurs under mechanical stress only before the material breaks. However, at reduced temperatures, propylene polymers display brittle fracture, i.e. fracture occurs virtually without deformation or at a high propagation rate. A parameter which describes the temperature at which the deformation behavior changes from tough to brittle is the "brittle/tough transition temperature".

In the propylene copolymer compositions of the present invention, the propylene copolymer A is generally present as matrix and the propylene copolymer B, which usually has a stiffness lower than that of the matrix and acts as impact modifier, is dispersed therein in finely divided form. Such an impact modifier not only increases the toughness at elevated temperatures but also reduces the brittle/tough transition temperature. For the purposes of the present invention, the brittle/tough transition temperature is determined by means of puncture tests in accordance with ISO 6603-2, in which the temperature is reduced in continuous steps. The force/displacement graphs recorded in the puncture tests enable conclusions as to the deformation behavior of the test specimens at the respective temperature to be drawn and thus allow the brittle/tough transition temperature to be determined. To characterize the specimens according to the present invention, the temperature is reduced in steps of 2°C and the brittle/tough transition temperature is defined as the temperature at which the total deformation is at least 25% below the mean total deformation of the preceding 5 measurements; here, the total deformation is the displacement through which the punch has traveled when the force has passed through a maximum and dropped to 3% of this maximum force. In the case of specimens which do not display a sharp transition and in which none of the measurements meet the specified criterion, the total deformation at 23°C is employed as reference value and the brittle/tough transition temperature is the temperature at which the total deformation is at least 25% below the total deformation at 23°C. Preferred propylene copolymer compositions of the present invention have a brittle/tough transition temperature comprised between -20°C and 0°C, preferably comprised between -15°C and -3 °C and more preferably comprised between 10°C and -5°C.

Furthermore, the propylene copolymer compositions of the present invention usually display good stress whitening behavior. For the purposes of the present invention, stress whitening is the occurrence of whitish discoloration in the stressed region when the polymer is subjected to mechanical stress. In general, it is assumed that the white discoloration is caused by small voids being formed in the polymer under mechanical stress. Good stress whitening behavior means that no or only very few regions having a whitish discoloration occur under mechanical stress.

One method of quantifying stress whitening behavior is to subject defined test specimens to a defined impact stress and then to measure the size of the resulting white spots. Accordingly, in the dome method, a falling dart is dropped onto a test specimen in a falling dart apparatus in accordance with DIN 53443 Part 1. In this method, a falling dart having a mass of 250 g and a punch of 5 mm in diameter is used. The dome radius is 25 mm and the drop is 50 cm. The test specimens used are injection-molded circular disks having a diameter of 60 mm and a thickness of 2 mm, and each test specimen is subjected to only one impact test. The stress whitening is reported as the diameter of the visible stress whitening region in mm; the value reported is in each case the mean of 5 test specimens and the individual values are determined as the mean of the two values in the flow direction on injection molding and perpendicular thereto on the side of the circular disk opposite that on which impact occurs.

The propylene copolymer compositions of the present invention generally display no or only very little stress whitening determined by the dome method at 23°C. In the case of preferred propylene copolymer compositions, a value of from 0 to 8 mm, preferably from 0 to 5 mm and in particular from 0 to 2.5 mm, is determined by the dome method at 23°C. Very particularly preferred propylene copolymer compositions display no stress whitening at all in the test carried out by the dome method at 23°C.

The propylene copolymer compositions of the present invention generally further comprise customary amounts of customary additives known to those skilled in the art, e.g. stabilizers, lubricants and mold release agents, fillers, nucleating agents, antistatics, plasticizers, dyes, pigments, anti-fungal, anti-microbial agents, film cavitating agents or flame retardants. In general, these are incorporated during granulation of the pulverulent product obtained in the polymerization.

Customary stabilizers include antioxidants such as sterically hindered phenols, sterically hindered amines or UV stabilizers, processing stabilizers such as phosphites or phosphonites, acid scavengers such as calcium stearate or zinc stearate or dihydrotalcite, as well as calcium, zinc and sodium caprylate salts. In general, the propylene copolymer compositions of the present invention contain one or more stabilizers in amounts of up to 2% by weight.

Suitable lubricants and mold release agents are, for example, fatty acids, calcium, sodium or zinc salts of fatty acids, fatty acid amides or low molecular weight polyolefin waxes, which are usually used in concentrations of up to 2% by weight.

Possible fillers are, for example, talc, calcium carbonate, chalk or glass fibers, and these are usually used in amounts of up to 50% by weight.

Examples of suitable nucleating agents are inorganic additives such as talc, silica or kaolin, salts of monocarboxylic or polycarboxylic acids, e.g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyldibenzylidenesorbitol or salts of diesters of phosphoric acid, e.g. sodium 2,2'-methylenebis(4,6,-di-tert-butylphenyl)phosphate. The nucleating agent content of the propylene copolymer composition is generally up to 5% by weight.

Such additives are generally commercially available and are described, for example, in Gächter/Müller, Plastics Additives Handbook, 4th Edition, Hansa Publishers, Munich, 1993.

In a preferred embodiment, the propylene copolymer compositions of the present invention contain from 0.1 to 1% by weight, preferably from 0.15 to 0.25% by weight, of a nucleating agent, in particular dibenzylidenesorbitol or a dibenzylidenesorbitol derivative, particularly preferably dimethyldibenzylidenesorbitol.

In the case of preferred propylene copolymer compositions obtained from propylene and ethylene, the structure of the propylene-ethylene copolymers B can be determined by means of ¹³C-NMR spectroscopy as well as by means IR spectroscopy. Evaluation of the spectrum is prior art and can be carried out by a person skilled in the art using, for example, the method described by H. N. Cheng, Macromolecules 17 (1984), pp. 1950-1955 or L. Abis et al., Makromol. Chemie 187 (1986), pp. 1877-1886. The structure can then be described by the proportions of "PEₓ" and of "PEP", where PEₓ refers to the propylene-ethylene units having ≥ 2 successive ethylene units and PEP refers to the propylene-ethylene units having an isolated ethylene unit between two propylene units. Preferred propylene copolymer compositions obtained from propylene and ethylene have a PEP/PEₓ ratio in the range from 0.9 to 2.2, preferably in the range from 1 to 2.0, particularly preferably in the range from 1.3-2.0.

The properties of the propylene copolymer compositions of the present invention are also determined by the viscosity ratio of the propylene copolymer B and the propylene copolymer A, i.e. the ratio of the molar mass of the dispersed phase to the molar mass of the matrix. In particular, this influences the transparency.

To determine the viscosity ratio, the propylene copolymer compositions can be fractionated by means of TREF fractionation (Temperature Rising Elution Fractionation). The propylene copolymer B is then the combined fractions which are eluted by xylene at temperatures up to and including 70°C. The propylene copolymer A is obtained from the combined fractions which are eluted by xylene at temperatures above 70°C. However, at high comonomer contents in the propylene copolymer A, a clean TREF fractionation presents difficulties since the elution temperature of the propylene copolymer A drops below 70°C with increasing comonomer content. One way of obtaining information about the individual components is to carry out the examination of the propylene copolymer A using the polymer taken from the reactor directly after the first polymerization step. The propylene copolymer B can be separated from the product of a separate test run in which a polymerization identical to that for the propylene copolymer composition to be examined has been carried out but with no addition of comonomer in the first polymerization step, i.e. a propylene homopolymer has been prepared. The shear viscosity of the polymers is determined on the components obtained in this way. The determination is usually carried out by a method based on ISO 6721-10 using a rotation viscometer having a plate/plate geometry, diameter = 25 mm, amplitude = 0.05-0.5, preheating time = 10-12 min, at a temperature of from 200 to 230°C. The ratio of the shear viscosity of propylene copolymer B to that of propylene copolymer A is then reported at a shear rate of 100s⁻¹.

In preferred propylene copolymer compositions, the ratio of the shear viscosity of propylene copolymer B to that of propylene copolymer A at a shear rate of 100s⁻¹ is in the range from 0.3 to 2.5, preferably from 0.5 to 2 and particularly preferably in the range from 0.7 to 1.75.

The propylene copolymer compositions of the present invention preferably have a narrow molar mass distribution M_{w}/Mₙ. The molar mass distribution M_{w}/Mₙ is, for the purposes of the invention, the ratio of the weight average molar mass M_{w} to the number average molar mass Mₙ. The molar mass distribution M_{w}/Mₙ is preferably in the range from 1.5 to 3.5, particularly preferably in the range from 2 to 2.5 and in particular in the range from 2 to 2.4.

The molar mass Mₙ of the propylene copolymer compositions of the present invention is preferably in the range from 20,000 g/mol to 500,000 g/mol, particularly preferably in the range from 50,000 g/mol to 200,000 g/mol and very particularly preferably in the range from 80,000 g/mol to 150,000 g/mol.

The composition of the present invention is preferably carried out in a multistage polymerization process comprising at least two successive polymerization steps which are generally carried out in a reactor cascade. It is possible to use the customary reactors employed for the preparation of propylene polymers.

The polymerization can be carried out in a known manner in bulk, in suspension, in the gas phase or in a supercritical medium. It can be carried out batchwise or preferably continuously. Solution processes, suspension processes, stirred gas-phase processes or gas-phase fluidized-bed processes are possible. As solvents or suspension media, it is possible to use inert hydrocarbons, for example isobutane, or else the monomers themselves. It is also possible to carry out one or more steps of the process of the present invention in two or more reactors. The size of the reactors is not of critical importance for the process of the present invention. It depends on the output which is to be achieved in the individual reaction zone(s).

Preference is given to processes in which the polymerization in the second step in which the propylene copolymer(s) B is/are formed takes place from the gas phase. The preceding polymerization of the propylene copolymers A can be carried out either in bulk, i.e. in liquid propylene as suspension medium, or else from the gas phase. If all polymerizations take place from the gas phase, they are preferably carried out in a cascade comprising stirred gas-phase reactors which are connected in series and in which the pulverulent reaction bed is kept in motion by means of a vertical stirrer. The reaction bed generally consists of the polymer which is polymerized in the respective reactor. If the initial polymerization of the propylene copolymers A is carried out in bulk, preference is given to using a cascade made up of one or more loop reactors and one or more gas-phase fluidized-bed reactors. The preparation can also be carried out in a multizone reactor.

To prepare the propylene copolymers present in the propylene copolymer compositions of the present invention, preference is given to using catalyst systems based on metallocene compounds of transition metals of group 3, 4, 5 or 6 of the Periodic Table of the Elements.

Particular preference is given to catalyst systems based on metallocene compounds of the formula (I), 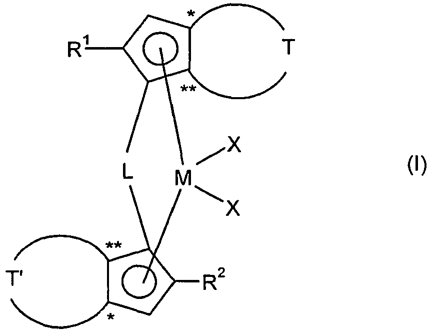 where
- M: is zirconium, hafnium or titanium, preferably zirconium,
- X: are identical or different and are each, independently of one another, hydrogen or halogen or an -R, -OR, -OSO₂CF₃, -OCOR, -SR, NR₂ or -PR₂ group, where R is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, preferably C₁-C₁₀-alkyl such as methyl, ethyl, n-propyl, isopropyl, n-butyl, isobutyl, sec-butyl, tert-butyl, n-pentyl, n-hexyl, n-heptyl or n-octyl or C₃-C₂₀-cycloalkyl such as cyclopentyl or cyclohexyl, where the two radicals X may also be joined to one another and preferably form a C₄-C₄₀-dienyl ligand, in particular a 1,3-dienyl ligand, or an -OR'O- group in which the substituent R' is a divalent group selected from the group consisting of C₁-C₄₀-alkylidene, C₆-C₄₀-arylidene, C₇-C₄₀-alkylarylidene and C₇-C₄₀-arylalkylidene, where X is preferably a halogen atom or an -R or -OR group or the two radicals X form an -OR'O- group and X is particularly preferably chlorine or methyl,
- L: is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, which may contain heteroatoms of groups 13-17 of the Periodic Table of the Elements, or a silylidene group having up to 5 silicon atoms, e.g. -SiMe₂- or -SiPh₂-, where L preferably is a radical selected from the group consisting of -SiMe₂-, - SiPh₂-, -SiPhMe-, -SiMe(SiMe₃)-, -CH₂-, -(CH₂)₂-, -(CH₂)₃- and -C(CH₃)₂-,
- R¹: is linear or branched C₁-C₂₀-alkyl, C₃-C₂₀-cycloalkyl which may be substituted by one or more C₁-C₁-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R¹ is preferably unbranched in the α position and is preferably a linear or branched C₁-C₁₀-alkyl group which is unbranched in the α position, in particular a linear C₁-C₄-alkyl group such as methyl, ethyl, n-propyl or n-butyl,
- R²: is a group of the formula -C(R³)₂R⁴, where
- R³: are identical or different and are each, independently of one another, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring, where R³ is preferably a linear or branched C₁-C₁₀-alkyl group, and
- R⁴: is hydrogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁴ is preferably hydrogen,
- T and T': are divalent groups of the formulae (II), (III), (IV), (V) or (VI), 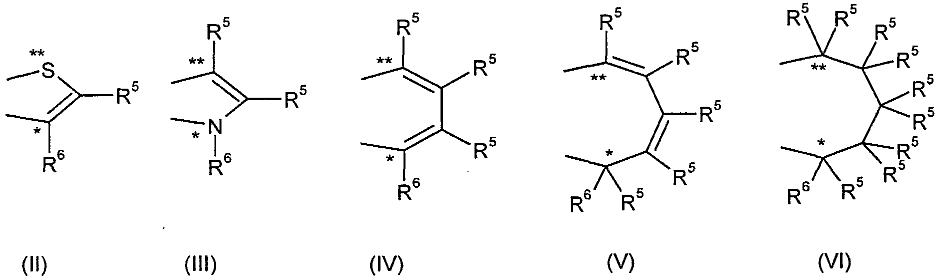
where
the atoms denoted by the symbols * and ** are joined to the atoms of the compound of the formula (I) which are denoted by the same symbol, and
- R⁵: are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁵ is preferably hydrogen or a linear or branched C₁-C₁₀-alkyl group, in particular a linear C₁-C₄-alkyl group such as methyl, ethyl, n-propyl or n-butyl, and
- R⁶: are identical or different and are each, independently of one another, halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁶ is preferably an aryl group of the formula (VII), 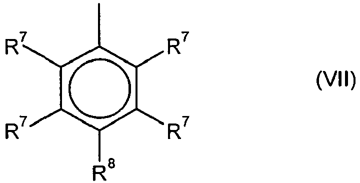 where
R⁷ are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R⁷ may be joined to form a saturated or unsaturated C₃-C₂₀ ring, where R⁷ is preferably a hydrogen atom, and
R⁸ is hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R⁸ is preferably a branched alkyl group of the formula -C(R⁹)₃, where
R⁹ are identical or different and are each, independently of one another, a linear or branched C₁-C₆-alkyl group or two or three of the radicals R⁹ are joined to form one or more ring systems.

It is preferred that at least one of the groups T and T' is substituted by a radical R⁶ of the formula (VII); it is particularly preferred that both groups are substituted by such a radical. Very particular preference is given to at least one of the groups T and T' being a group of the formula (IV) which is substituted by a radical R⁶ of the formula (VII) and the other either has the formula (II) or (IV) and is likewise substituted by a radical R⁶ of the formula (VII).

The greatest preference is given to catalyst systems based on metallocene compounds of the formula (VIII),

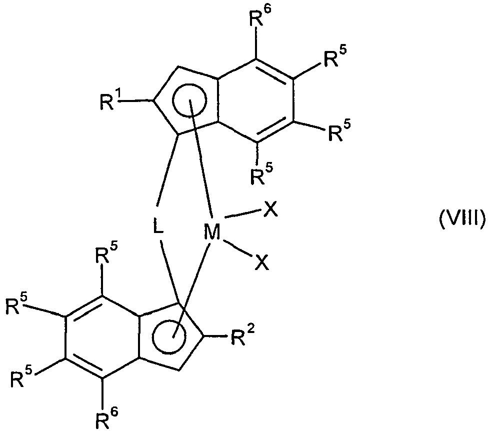

Particularly useful metallocene compounds and methods of preparing them are described, for example, in WO 01/48034 and the European patent application No. 01204624.9.

It is also possible to use mixtures of various metallocene compounds or mixtures of various catalyst systems. However, preference is given to using only one catalyst system comprising one metallocene compound, which is used for the polymerization of the propylene copolymer A and the propylene copolymer B.

Examples of useful metallocene compounds are
dimethylsilanediyl(2-ethyl-4-(4'-tert-butylphenyl)indenyl)(2-isopropyl-4-(4'-tert-butylphenyl)indenyl)zirconium dichloride,
dimethylsilanediyl(2-methyl-4-(4'-tert-butylphenyl)indenyl)(2-isopropyl-4-(1-naphthyl)indenyl)zirconium dichloride,
dimethylsilanediyl(2-methyl-4-phenyl-1-indenyl)(2-isopropyl-4-(4'-tert-butylphenyl)-1-indenyl)zirconium dichloride,
dimethylsilanediyl(2-methylthiapentenyl)(2-isopropyl-4-(4`-tert-butylphenyl)indenyl)zirconium dichloride,
dimethylsilanediyl(2-isopropyl-4-(4`-tert-butylphenyl)indenyl)(2-methyl-4,5-benzindenyl)zirconium dichloride,
dimethylsilanediyl(2-methyl-4-(4'-tert-butylphenyl)indenyl)(2-isopropyl-4-(4'-tert-butylphenyl)indenyl)zirconium dichloride,
dimethylsilanediyl(2-methyl-4-(4'-tert-butylphenyl)indenyl)(2-isopropyl-4-phenylindenyl)zirconium dichloride,
dimethylsilanediyl(2-ethyl-4-(4'-tert-butylphenyl)indenyl)(2-isopropyl-4-phenyl)indenyl)zirconium dichloride and
dimethylsilanediyl(2-isopropyl-4-(4'-tert-butylphenyl)indenyl)(2-methyl-4-(1-naphthyl)indenyl)zirconium dichloride
and mixtures thereof.

The preferred catalyst systems based on metallocene compounds generally further comprise cation-forming compounds as cocatalysts. Suitable cation-forming compounds which are able to react with the metallocene compound to convert it into a cationic compound are, for example, compounds such as an aluminoxane, a strong uncharged Lewis acid, an ionic compound having a Lewis-acid cation or an ionic compound containing a Brönsted acid as cation. The cation-forming compounds are frequently also referred to as compounds which form metallocenium ions.

As aluminoxanes, it is possible to use, for example, the compounds described in WO 00/31090. Particularly useful compounds are open-chain or cyclic aluminoxane compounds of the formula (IX) or (X) 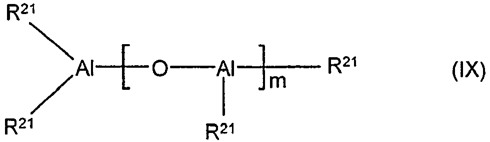 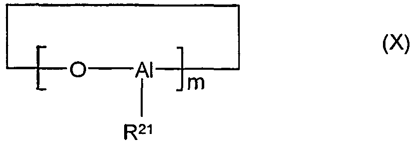 where
- R²¹: is a C₁-C₄-alkyl group, preferably a methyl or ethyl group, and
- m: is an integer from 5 to 30, preferably from 10 to 25.

These oligomeric aluminoxane compounds are usually prepared by reacting a solution of trialkylaluminum with water. The oligomeric aluminoxane compounds obtained in this way are generally in the form of mixtures of both linear and cyclic chain molecules of various lengths, so that m is to be regarded as a mean. The aluminoxane compounds can also be present in admixture with other metal alkyls, preferably aluminum alkyls.

Furthermore, modifed aluminoxanes in which some of the hydrocarbon radicals or hydrogen atoms are replaced by alkoxy, aryloxy, siloxy or amide radicals may be used in place of the aluminoxane compounds of the formulae (IX) or (X).

It has been found to be advantageous to use the metallocene compounds and the aluminoxane compounds in such amounts that the atomic ratio of aluminum from the aluminoxane compounds to the transition metal from the metallocene compound is in the range from 10:1 to 1000:1, preferably from 20:1 to 500:1 and in particular in the range from 30:1 to 400:1.

As strong, uncharged Lewis acids, preference is given to compounds of the formula (XI)

M²X¹X²X³ (XI)

where
- M²: is an element of group 13 of the Periodic Table of the Elements, in particular B, Al or G and preferably B,
- X¹, X² and X³: are each hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical, or fluorine, chlorine, bromine or iodine, in particular a haloaryl, preferably pentafluorophenyl.

Further examples of strong, uncharged Lewis acids are mentioned in WO 00/31090.

Particular preference is given to compounds of the formula (XI) in which X¹, X² and X³ are identical, preferably tris(pentafluorophenyl)borane.

Strong uncharged Lewis acids suitable as cation-forming compounds also include the reaction products from the reaction of a boronic acid with two equivalents of a trialkylaluminum or the reaction products from the reaction of a trialkylaluminum with two equivalents of an acidic fluorinated, in particular perfluorinated, carbon compound such as pentafluorophenol or bis(pentafluorophenyl) borinic acid.

Suitable ionic compounds containing Lewis-acid cations include salt-like compounds of the cation of the formula (XII)

[(Y^{a+})Q₁Q₂...Q_{z}]^{d+} (XII)

where
- Y: is an element of groups 1 to 16 of the Periodic Table of the Elements,
- Q₁ to Q_{z}: are singly negatively charged groups such as C₁-C₂₈-alkyl, C₆-C₁₅-aryl, alkylaryl, arylalkyl, haloalkyl, haloaryl each having from 6 to 20 carbon atoms in the aryl radical and from 1 to 28 carbon atoms in the alkyl radical, C₃-C₁₀-cycloalkyl which may be substituted by C₁-C₁₀-alkyl groups, or halogen, C₁-C₂₈-alkoxy, C₆-C₁₅-aryloxy, silyl or mercapto groups,
- a: is an integer from 1 to 6 and
- z: is an integer from 0 to 5,
- d: is the difference a-z, but d is greater than or equal to 1.

Particularly useful Lewis-acid cations are carbonium cations, oxonium cations and sulfonium cations and also cationic transition metal complexes. Particular mention may be made of the triphenylmethyl cation, the silver cation and the 1,1'-dimethylferrocenyl cation. They preferably have noncoordinating counterions, in particular boron compounds as are mentioned in WO 91/09882, preferably tetrakis(pentafluorophenyl)borate.

Salts having noncoordinating anions can also be prepared by combining a boron or aluminum compound, e.g. an aluminum alkyl, with a second compound which can react to link two or more boron or aluminum atoms, e.g. water, and a third compound which forms an ionizing ionic compound with the boron or aluminum compound, e.g. triphenylchloromethane. A fourth compound which likewise reacts with the boron or aluminum compound, e.g. pentafluorophenol, can additionally be added.

Ionic compounds containing Brönsted acids as cations preferably likewise have noncoordinating counterions. As Brönsted acids, particular preference is given to protonated amine or aniline derivatives. Preferred cations are N,N-dimethylanilinium, N,N-dimethylcylohexylammonium and N,N-dimethylbenzylammonium and also derivatives of the latter two.

Preferred ionic compounds C) are, in particular, N,N-dimethylanilinium tetrakis(pentafluorophenyl)borate, N,N-dimethylcyclohexylammonium tetrakis(pentafluorophenyl)borate and N,N-dimethylbenzylammonium tetrakis(pentafluorophenyl)borate.

It is also possible for two or more borate anions to be joined to one another, as in the dianion [(C₆F₅)₂B-C₆F₄-B(C₆F₅)₂]²⁻, or the borate anion can be bound via a bridge having a suitable functional group to the support surface.

Further suitable cation-forming compounds are listed in WO 00/31090.

The amount of strong, uncharged Lewis acids, ionic compounds having Lewis-acid cations or ionic compounds containing Brönsted acids as cations is preferably from 0.1 to 20 equivalents, preferably from 1 to 10 equivalents, based on the metallocene compound.

Suitable cation-forming compounds also include boron-aluminum compounds such as di[bis(pentafluorophenylboroxy)]methylalane. Such boron-aluminum compounds are disclosed, for example, in WO 99/06414.

It is also possible to use mixtures of all of the abovementioned cation-forming compounds. Preferred mixtures comprise aluminoxanes, in particular methylaluminoxane, and an ionic compound, in particular one containing the tetrakis(pentafluorophenyl)borate anion, and/or a strong uncharged Lewis acid, in particular tris(pentafluorophenyl)borane.

Preference is given to using both the metallocene compound and the cation-forming compound in a solvent, preferably aromatic hydrocarbons having from 6 to 20 carbon atoms, in particular xylenes and toluene.

The preferred catalyst systems based on metallocene compounds can further comprise, as additional component, a metal compound of the formula (XIII),

M³(R²²)ᵣ(R²³)ₛ(R²⁴)ₜ (XIII)

where
- M³: is an alkali metal, an alkaline earth metal or a metal of group 13 of the Periodic Table, i.e. boron, aluminum, gallium, indium or thallium,
- R²²: is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
- R²³ and: R²⁴ are each hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
- r: is an integer from 1 to 3
and
- s and t: are integers from 0 to 2, where the sum r+s+t corresponds to the valence of M³,
where the metal compound of the formula (XIII) is not identical to the cation-forming compound. It is also possible to use mixtures of various metal compounds of the formula (XIII).

Among metal compounds of the formula (XIII), preference is given to those in which
- M³: is lithium, magnesium or aluminum and
- R²³ and R²⁴: are each C₁-C₁₀-alkyl.

Particularly preferred metal compounds of the formula (XIII) are n-butyllithium, n-butyl-n-octylmagnesium, n-butyl-n-heptylmagnesium, tri-n-hexylaluminum, triisobutylaluminum, triethyl-aluminum and trimethylaluninum and mixtures thereof.

If a metal compound of the formula (XIII) is used, it is preferably used in such an amount that the molar ratio of M³ from formula (XIII) to the transition metal from the metallocene compound is from 800:1 1 to 1:1, in particular from 200:1 1 to 2:1.

The preferred catalyst systems based on metallocene compounds are usually used in supported form. Suitable supports are, for example, porous organic or inorganic inert solids such as finely divided polymer powders, talc, sheet silicates or inorganic oxides. Inorganic oxides suitable as supports may be found among the oxides of elements of groups 2, 3, 4, 5, 13, 14, 15 and 16 of the Periodic Table of the Elements. Preference is given to oxides or mixed oxides of the elements calcium, aluminum, silicon, magnesium or titanium and also corresponding oxide mixtures. Other inorganic oxides which can be used alone or in combination with the abovementioned oxidic supports are, for example, ZrO₂ or B₂O₃. Preferred oxides are silicon dioxide and aluminum oxide, in particular silica gels or pyrogenic silicas. An example of a preferred mixed oxide is calcined hydrotalcite.

The support materials used preferably have a specific surface area in the range from 10 to 1000 m²/g, preferably from 50 to 500 m²/g and in particular from 200 to 400 m²/g, and a pore volume in the range from 0.1 to 5 ml/g, preferably from 0.5 to 3.5 ml/g and in particular from 0.8 to 3.0 ml/g. The mean particle size of the finely divided supports is generally in the range from 1 to 500 µm, preferably from 5 to 350 µm and in particular from 10 to 100 µm.

In the preparation of the propylene copolymers present in the propylene copolymer compositions of the present invention, preference is given to firstly forming the propylene copolymer A in a first step by polymerizing from 80% by weight to 99% by weight, based on the total weight of the mixture, of propylene in the presence of further olefins, usually from 40°C to 120°C and pressures in the range from 0.5 bar to 200 bar. The polymer obtainable by means of this reaction subsequently has a mixture of from 2 to 95% by weight of propylene and from 5% to 98% by weight of further olefins polymerized onto it in a second step, usually at from 40°C to 120°C and pressures in the range from 0.5 bar to 200 bar. The polymerization of the propylene copolymer A is preferably carried out at from 60 to 80°C, particularly preferably from 65 to 75°C, and a pressure from 5 to 100 bar, particularly preferably from 10 bar to 50 bar. The polymerization of the propylene copolymer B is preferably carried out at from 60 to 80°C, particularly preferably from 65 to 75°C, and a pressure of from 5 to 100 bar, particularly preferably from 10 bar to 50 bar.

In the polymerization, it is possible to use customary additives, for example molar mass regulators such as hydrogen or inert gases such as nitrogen or argon.

The amounts of the monomers added in the individual steps and also the process conditions such as pressure, temperature or the addition of molar mass regulators such as hydrogen is chosen so that the polymers formed have the desired properties. The scope of the invention includes the technical teaching that a propylene copolymer composition which has a low stiffness and at the same time a good transparency is obtainable, for example, by setting defined comonomer contents of the propylene copolymers A and B and the viscosity ratio of propylene copolymer A to propylene copolymer B.

The composition of the propylene copolymer B has significant effects on the transparency of the propylene copolymer compositions of the present invention. A reduction in the comonomer content of the propylene copolymer B leads to an improved transparency, while at the same time the stiffness of the matrix also decreases as a result of the better compatibility with the propylene copolymer B. The propylene copolymer B, or constituents of the propylene copolymer B, thus act as plasticizer(s) for the matrix. An increase in the comonomer content of the propylene copolymer B results in an improvement in the impact toughness, particularly at low temperatures, but at the expense of the transparency. In addition, the proportion of propylene copolymer B which is miscible with the matrix and acts as plasticizer is decreased, as a result of which the stiffness of the copolymer increases. At the same time, it is also possible to decrease the stiffness by increasing the proportion of the propylene copolymer B. Accordingly, the products of the present invention display an advantageous combination of these properties, i.e. flexible products which are at the same time transparent are obtained. The transparency of the propylene copolymer compositions of the present invention is virtually independent of the proportion of the propylene copolymer B present therein.

Adjustment of the viscosity ratio of propylene copolymer A to propylene copolymer B influences the dispersion of the propylene copolymer B in the polymer matrix and thus has effects on the transparency of the propylene copolymer compositions and on the mechanical properties.

The propylene copolymer compositions of the present invention display a high flexibility in combination with a good transparency. Furthermore, they have low proportions of n-hexane-soluble material, good stress whitening behavior and also a good impact toughness at low temperatures, a high stiffness and good heat distortion resistance. Since the temperature for the brittle/tough transition is below 0°C, the propylene copolymer compositions of the present invention can also be used in a temperature range which places high demands on the material properties of the copolymers at temperatures below freezing point. A further advantage is that the shrinkage behavior of the propylene copolymer compositions corresponds to that of propylene polymers. In the case of moldings consisting of different materials, for example containers which have been produced from one propylene polymer and are to be closed with a flexible lid, this leads to advantages in respect of accuracy of fit and freedom from leaks, in particular when the containers are subjected to washing at elevated temperatures. This opens up wide-ranging new possibilities for the use of the propylene copolymer compositions of the present invention in transparent applications.

The copolymers of the present invention are suitable for producing fibers, films or moldings, in particular for producing injection-molded parts, films, sheets or large hollow bodies, e.g. by means of injection-molding or extrusion processes. Possible applications are the fields of packaging, household articles, containers for storage and transport, office articles, electrical equipment, toys, laboratory requisites, motor vehicle components and gardening requisites, in each case especially for applications at low temperatures.

When the copolymers of the invention are used to produce films, the films can be oriented or non-oriented films, and can be used alone or as part of a co-extruded multilayer structure. The films may also be used as a coating layer to coat a substrate or as part of a laminate structure with other polyolefin films. Preferably, the films are cast films.

The films possess properties that make them suitable for a wide variety of applications, such as in diapers, IV bags, stationary covers, sterilizable medical films and film packaging and cooking. Preferably the films have a dart impact value, measured according to ASTM D1709A, of greater than 150 gm, more preferably greater than 200 gm, most preferably greater than 300 gm for a 1 mil (25.4 µm) thickness of film. Preferably, the films have a puncture resistance of greater than about 300 J/cm3, more preferably 400 J/cm3, for a 1 mil (25.4 µm) thickness of film. As described in this specification, puncture resistance is measured with an Instron Model 4202 testing apparatus commercially available from Instron Corporation using a 200 lb load cell. A 19 mm (0.750 in) dart probe, moving at a rate of 254 mm/min (10 in/min), was used to penetrate a 10.2 cm (4 inch) diameter section of a 150 mm (6 in) square of a film specimen. The test was conducted in a standard laboratory atmosphere of 23°C +/- 2°C and 50 +/- 5 % relative humidity, and the probe penetration was measured.

The films of the invention also possess good food packaging characteristics. Preferably the films have a xylene solubles of less than about 30.0%, more preferably less than 25%, measured as described below.

The films have a water vapor transmission rate ("WVTR"), measured according to ASTM F1249, of greater than 11.6 gm/m2-day, preferably greater than 14.0 gm/m2-day for a 1 mil (25.4 µm) thickness of film; an oxygen transmission rate ("OTR"), measured according to ASTM D3985, of preferably greater than 3875 gm/m2-day, more preferably greater than 4650 gm/m2-day for a 1 mil (25.4 µm) thickness of film; and a carbon dioxide transmission rate ("CO2TR"), measured according to ASTM D3985, of preferably greater than about 19,375 cc/m2-day, more preferably greater than 23,250 cc/m2-day for a 1 mil (25.4 µm) thickness of film.

The films have a heat resistance of at least 116°C, allowing them to be used in food packaging applications where the package is heated. As described in this specification, heat resistance is measured by first stacking 10 plies of 10.2 cm x 10.2 cm of film. The stacked film sample is placed in a forced air oven and then exposed to a given temperature for 15 minutes until the desired temperature is reached. A light weight sample rack is placed over the sample just to keep it from moving. After 15 minutes of exposure, the sample is taken out of the oven and separated. If the film comes apart without sticking, it is termed as a "pass", if not it is a failure. The highest temperature at which the film samples come apart without sticking is determined as the "Heat Resistance."

The optical and film toughness characteristics of the films of the invention have been recited on the basis of a film thickness of about 1 mil (25.4 µm). However, one skilled in the art would recognize that the films of the invention can generally have any thickness that meet the optical property and film toughness characteristics required for the particular application. Generally, it is expected that the films of the invention will be from 0.5 mil (12.7 µm) to 10 mil (254 µm), preferably from 0.6 mil (15.2 µm) to 2.5 mil (63.5 µm).

The invention is illustrated by the following preferred examples which do not restrict the scope of the invention:

### Examples

### Example 1

### Preparation of the metallocene catalyst

3 kg of Sylopol 948 were placed in a process filter whose filter plate pointed downward and suspended in 15 L of toluene. 71 of 30% strength by weight MAO solution (from Albemarle) were metered in while stirring at such a rate that the internal temperature did not exceed 35°C. After stirring for a further 1 hour at a low stirrer speed, the suspension was filtered, firstly with no applied pressure and then under a nitrogen pressure of 3 bar. Parallel to the treatment of the support material, 2.0 L of 30% strength by weight MAO solution were placed in a reaction vessel, 92.3 g of rac-dimethylsilyl(2-methyl-4-(para-tert-butylphenyl)indenyl)(2-isopropyl-4-(para-tert-butylphenyl)indenyl)zirconium dichloride, prepared according to example 18 of WO 01/48034, were added, the solution was stirred for 1 hour and allowed to settle for a further 30 minutes. The solution was subsequently run onto the pretreated support material with the outlet closed. After the addition was complete, the outlet was opened and the filtrate was allowed to run off. The outlet was subsequently closed, the filter cake was stirred for 15 minutes and allowed to stand for 1 hour. The liquid was then pressed out from the filter cake by means of a nitrogen pressure of 3 bar with the outlet open. 15 L of isododecane were added to the solid which remained, the mixture was stirred for 15 minutes and filtered. The washing step was repeated and the filter cake was subsequently pressed dry by means of a nitrogen pressure of 3 bar. For use in the polymerization, the total amount of the catalyst was resuspended in 15 L of isododecane.

### Polymerization

The process was carried out in two stirring autoclaves which were connected in series and each had a utilizable capacity of 200 L and were equipped with a free-standing helical stirrer. Both reactors contained an agitated fixed bed of finely divided propylene polymer.

Propylene and ethylene were passed in gaseous form into the first polymerization reactor and polymerized at a mean residence time as shown in Table 1 by means of the metallocene catalyst at a pressure and temperature as shown in Table 1. The amount of metallocene catalyst metered in was such that the amount of polymer transferred from the first polymerization reactor into the second polymerization reactor corresponded, on average, to the amounts shown in Table 1. The metallocene catalyst was metered in together with the Frisch propylene added to regulate the pressure. Triethylaluminum in the form of a 1 molar solution in heptane was likewise metered into the reactor.

The propylene copolymer obtained in the first gas-phase reactor was transferred together with still active catalyst constituents into the second gas-phase reactor. There, the propylene-ethylene copolymer B was polymerized onto it at a total pressure, a temperature and a mean residence time as shown in Table 1. The ethylene concentration in the reaction gas was monitored by gas chromatography. The weight ratio of the propylene copolymer A formed in the first reactor [A(I)] to the propylene copolymer B formed in the second reactor [B(II)] is shown in Table 1. Isopropanol (in the form of a 0.5 molar solution in heptane) was likewise metered into the second reactor. The weight ratio of the polymer formed in the first reactor to that formed in the second reactor was controlled by means of isopropanol which was metered into the second reactor in the form of a 0.5 molar solution in heptane and is shown in Table 1. To regulate the molar mass, hydrogen was metered into the second reactor as necessary. The proportion of propylene-ethylene copolymer B formed in the second reactor is given by the difference of amount transferred and amount discharged according to the relationship (output from second reactor - output from first reactor)/output from second reactor.

| **Table 1: Polymerization conditions** | |
|---|---|
| | **Example 1** |
| Reactor I | |
| Pressure [bar] | 28 |
| Temperature [°C] | 73 |
| Triethylaluminum, 1M in heptane [ml/h] | 85 |
| Ethylene [% by volume] | 3 |
| Residence time [h] | 1.5 |
| C₂ [% by weight] in powder (IR) | 0.7 |
| Powder MFR (230°C/2.16 kg) [g/10 min]/ISO 1133 | 12.9 |
| Powder output [kg/h] | 31 |
| Reactor II | |
| Pressure [bar] | 18.1 |
| Temperature [°C] | 75 |
| Ethylene [% by volume] | 28 |
| Residence time [h] | 1.1 |
| Powder output [kg/h] | 45 |
| Powder MFR (230°C/2.16 kg) [g/10 min]/ISO 1133 | 11 |
| Content of propylene-ethylene copolymer A [% by weight] | 69 |
| Content of propylene-ethylene copolymer B [% by weight] | 31 |

| | |
|---|---|
| *) Standard 1/h: standard liters per hour | |

The polymer powder obtained in the polymerization was admixed with a standard additive mixture in the granulation step. Granulation was carried out using a twin-screw extruder ZSK 30 from Werner & Pfleiderer at a melt temperature of 250°C. The propylene copolymer composition obtained contained 0.04% by weight of Irganox 1010 (from Ciba Specialty Chemicals), 0.07% by weight of Irgafos 168, (from Ciba Specialty Chemicals), and 0.04% by weight of calcium stearate.

The properties of the propylene copolymer composition are shown in Tables 2 and 3. The data were determined on the propylene copolymer composition after addition of additives and granulation or on test specimens produced therefrom.

| **Table 2: Analytical results on the propylene copolymer composition** | |
|---|---|
| | **Example 1** |
| Proportion of n-hexane-soluble material [% by weight] | 1.9 |
| C₂ content (IR) [% by weight] | 3.5 |
| C₂ content of propylene-ethylene copolymer B (IR) [% by weight] | 9.5 |
| PEP* (IR) [% by weight] | 6.3 |
| PEₓ* (IR) [% by weight] | 3.0 |
| Molar mass distribution [M_{w}/Mₙ] | 2.4 |

| | |
|---|---|
| *) The PEP and PEₓ values were determined on a propylene-ethylene copolymer which had been separated off from a product which was polymerized under the conditions of Example 1 but without addition of ethylene in the first polymerization step. | |

| **Table 3: Use-related tests on the propylene copolymer composition** | |
|---|---|
| | **Example 1** |
| MFR (230°C/2,16 kg) [g/10 min]/ISO 1133 | 10 |
| DSC melting point [°C]/ ISO 3146 | 145.5 |
| | |
| Brittle/tough transition temperature [°C] | -6 |
| | |
| Tensile E modulus [MPa]/ISO 527 | 608 |
| Stress at yield [N/mm²] | 21.7 |
| Elongation at yield [%] | 16.3 |
| Stress at break [N/mm²] | 29.7 |
| Elongation at break [%] | 29.6 |
| Haze (1 mm*) [%]/ASTM D 1003 | 34 |

| | |
|---|---|
| *) Injection-molded plates having a thickness of 1 mm. | |

### Analysis

The production of the test specimens required for the use-related tests and the tests themselves were carried out in accordance with the standards indicated in Table 3.

The proportion of n-hexane-soluble material was determined by extraction using a modified FDA method. About 2.5 g of granules were weighed out and suspended in 1 1of n-hexane. The suspension was heated to 50°C □ 0.2°C over a period of 20-25 minutes while stirring and stirred for a further 2 hours at this temperature. The suspension was filtered through a glass frit which had been preheated to 50°C. About 350 g of the filtrate were weighed into an evaporator flask which had previously been dried over P₂O₅ in a desiccator for 12 hours. The filtrate was evaporated to about 20-30 ml at 60°C under reduced pressure on a rotary evaporator. The solution was transferred quantitatively with the aid of several rinses with warm hexane into a 200 ml evaporating basin which had previously been dried over P₂O₅ in a desiccator for 12 hours and weighed. The solution was evaporated to dryness on a hotplate while passing nitrogen over it. After evaporation, the evaporating basin was dried over P₂O₅ at 200 mbar in a desiccator for 12 hours, weighed and the extraction residue was determined. The same procedure was repeated without addition of polymer granules and the residue in pure n-hexane was determined. The residue in pure n-hexane was subtracted to determine the proportion of material which is extracted by n-hexane.

The brittle/tough transition was determined by means of the puncture test described in ISO 6603-2/40/20/C/4.4. The velocity of the punch was chosen as 4.4 m/s, the diameter of the support ring was 40 mm and the diameter of the impact ring was 20 mm. The test specimen was clamped in. The test specimen geometry was 6 cm □ 6 cm at a thickness of 2 mm. To determine the temperature dependence curve, measurements were carried out at steps of 2°C in the temperature range from 26°C to -35°C using a test specimen preheated/precooled to the respective temperature.

In the present example, the brittle/tough transition was determined from the total deformation in mm defined as the displacement through which the punch has traveled when the force has passed through a maximum and dropped to 3% of this maximum force. For the purposes of the present invention, the brittle/tough transition temperature is defined as the temperature at which the total deformation is at least 25% below the mean total deformation of the preceding 5 measurement points.

The determination of the Haze values was carried out in accordance with the standard ASTM D 1003. The test specimens were injection-molded plates having an edge length of 6 x 6 cm and a thickness of 1 mm. The test specimens were injection molded at a melt temperature of 250°C and a tool surface temperature of 30°C. After a storage time of 7 days at room temperature for after-crystallization, the test specimens were clamped into the clamping device in front of the inlet orifice of a Hazegard System XL 211 from Pacific Scientific and the measurement was subsequently carried out. Testing was carried out at 23°C, with each test specimen being examined once in the middle. To obtain a mean, 5 test specimens were tested in each case.

The stress whitening behavior was assessed by means of the domed method. In the dome method, the stress whitening was determined by means of a falling dart apparatus as specified in DIN 53443 Part 1 using a falling dart having a mass of 250 g, a punch diameter of 5 mm and a dome radius of 25 mm. The drop was 50 cm. As test specimen, use was made of an injection-molded circular disk having a diameter of 60 mm and a thickness of 2 mm. The test specimen was injection molded at a melt temperature of 250°C and a tool surface temperature of 30°C. Testing was carried out at 23°C, with each test specimen being subjected to only one impact test. The test specimen was first laid on a support ring without being clamped and the falling dart was subsequently released. To obtain the mean, at least five test specimens were tested. The diameter of the visible stress whitening region is reported in mm and was determined by measuring this region in the flow direction and perpendicular thereto on the side of the circular disk opposite that on which impact occurs and forming the mean of the two values.

The C₂ content of the propylene-ethylene copolymers was determined by means of IR spectroscopy.

The structure of the propylene-ethylene copolymer B was determined by means of ¹³C-NMR spectroscopy.

The tensile E modulus was measured in accordance with ISO 527-2:1993. The test specimen of type 1 having a total length of 150 mm and a parallel section of 80 mm was injection molded at a melt temperature of 250°C and a tool surface temperature of 30°C. To allow after-crystallization to occur, the test specimen was stored for 7 days under standard conditions of 23°C/50% atmospheric humidity. A test unit model Z022 from Zwick-Roell was used for testing. The displacement measurement system in the determination of the E modulus had a resolution of 1 µm. The testing velocity in the determination of the E modulus was 1 mm/min, otherwise 50 mm/min. The yield point in the determination of the E modulus was in the range 0.05%-0.25%.

The determination of the melting point was carried out by means of DSC (differential scanning calorimetry). The measurement was carried out in accordance with ISO standard 3146 using a first heating step at a heating rate of 20°C per minute up to 200°C, a dynamic crystallization at a cooled rate of 20°C per minute down to 25°C and a second heating step at a heating rate of 20°C per minute back up to 200°C. The melting point is then the temperature at which the enthalpy versus temperature curve measured during the second heating step displays a maximum.

The determination of the molar mass Mₙ and the molar mass distribution M_{w}/Mₙ was carried out by gel permeation chromatography (GPC) at 145°C in 1,2,4-trichlorobenzene using a GPC apparatus model 150C from Waters. The data were evaluated by means of the Win-GPC software from HS-Entwicklungsgesellschaft für wissenschaftliche Hard- und Software mbH, Ober-Hilbersheim. The columns were calibrated by means of polypropylene standards having molar masses from 100 to 10⁷ g/mol.

### Comparative Example 2

Comparative Example 2 was produced using a Ziegler Natta catalyst, and is a heterophasic copolymer of propylene with an ethylene content of 8.9 wt%, a xylene solubles content of about 11.5 wt%, and a MFR of 4.0, commercially available from Basell USA Inc. The weight percent of olefin polymer soluble in xylene at room temperature was determined by dissolving 2.5 g of polymer in 250 ml of xylene at room temperature in a vessel equipped with a stirrer, and heating at 135°C with agitation for 20 minutes. The solution was cooled to 25°C while continuing the agitation, and then left to stand without agitation for 30 minutes so that the solids could settle. The solids were filtered with filter paper, the remaining solution was evaporated by treating it with a nitrogen stream, and the solid residue is vacuum dried at 80°C until a constant weight is reached.

The polymer sample also contained 0.05 wt% of calcium stearate, 0.06 wt% of Irganox 1010 commercially available from Ciba Specialty Chemicals Corporation, and 0.06 wt% of Irgafos 168 commercially available from Ciba Specialty Chemicals Corporation.

### Comparative Example 3

Comparative Example 3 was produced using a Ziegler Natta catalyst and comprises 70 wt% of a propylene random copolymer having 2.7 wt% ethylene, and 30 wt% of an ethylene/propylene rubber containing 60 wt% of ethylene and 40 wt% propylene, commercially available from Basell USA Inc. The total composition has an ethylene content of 22 wt%, a xylene solubles content of about 31 wt%, measured as described above for Example 1, and a MFR of 9.5.

The sample also contained 0.1 wt% of Irganox 1010, commercially available from Ciba Specialty Chemicals Corporation and 0.03 wt% of DHT-4A commercially available from Kyowa Chemical Ind. Co. Ltd.

### Comparative Example 4

Comparative Example 4 was produced using a Ziegler Natta catalyst and is a random copolymer of propylene with a butene content of about 11.5 wt%, and a MFR of 5.5, commercially available from Basell USA Inc.

The sample also contained 0.05 wt% of Irganox 1010, commercially available from Ciba Specialty Chemicals Corporation, 0.10 wt% Irgafos 168, commercially available from Ciba Specialty Chemicals Corporation, and 0.025 wt% DHT-4A commercially available from Kyowa Chemical Ind. Co. Ltd.

### Comparative Example 5

Comparative Example 5 was produced using a Ziegler Natta catalyst and is a heterophasic copolymer of propylene with an ethylene content of 18.3 wt% and a xylene solubles content of about 19 wt%, measured as described above for Example 1, and a MFR of 4.0, commercially available from Basell USA Inc.

The sample also contained 0.05 wt% calcium stearate, 0.06 wt% of Irganox 1010 commercially available from Ciba Specialty Chemicals Corporation, 0.6 wt% of Irgafos 168 commercially available from Ciba Specialty Chemicals Corporation and 0.25 wt% DSTDP commercially available from Cytec Industries.

### Comparative Example 6

Comparative Example 6 was produced using a Ziegler Natta catalyst and is a propylene homopolymer having a 12 MFR and a xylene solubles content of about 4 wt%, measured as described above for Example 1, commercially available from Basell USA Inc.

The sample also contained 0.06 wt% calcium stearate, 0.075 wt% of Irganox 1010 commercially available from Ciba Specialty Chemicals Corporation and 0.075 wt% of Irgafos 168, commercially available from Ciba Specialty Chemicals Corporation.

### Comparative Example 7

Comparative Example 7 was produced using a Ziegler Natta catalyst and is a random copolymer of propylene with an ethylene content of about 3.2 wt%, an MFR of 6 and a xylene solubles content of about 6.2 wt%, measured as described above for Example 1, commercially available from Basell USA Inc.

The sample also contained 0.05 wt% calcium stearate, 0.06 wt% of Irganox 1010, commercially available from Ciba Specialty Chemicals Corporation, 0.06 wt% of Irganox 168 commercially available from Ciba Specialty Chemicals Corporation, 0.075 wt% erucamide, commercially available from Crompton Corporation, and 0.1 wt% of SiO2 concentrate (10811235) commercially available from Clariant International Ltd .

Cast films of 1 mil (25.4 µm) were prepared from the polymers of Example 1 and Comparative Examples 2-7. The film extrusion was conducted on the Gloucester Battenfeld Cast Film Extruder, commercially available from Battenfeld Gloucester Engineering Co., Inc. with a 102 cm wide die, 625 µm die gap. The die was made by Cloeren Incorporated and was equipped with a vacuum device as well as the air knife and static edge pinners to enhance film quenching. The die had an A/B/C type coextrusion feedblock.

Properties of the 1 mil (25.4 µm) film samples prepared from Example 1 and Comparative Examples 2-7 are summarized in Table 4. Gloss was measured according to ASTM D523. Clarity was measured according to ASTM D1003. Dart Impact was measured according to ASTM D1709A. Elmendorf Tear Strength according to ASTM D1922A. Film stiffness (1 % Secant Modulus) was measured according to ASTM D882.

Table 4 summarizes film optical and toughness properties of Example 1 and Comparative Examples 2-7.

| **Table 4** | | | | | | | |
|---|---|---|---|---|---|---|---|
| | **Example 1** | **Comp. Ex.2** | **Comp. Ex. 3** | **Comp. Ex. 4** | **Comp. Ex. 5** | **Comp. Ex. 6** | **Comp. Ex. 7** |
| Film Stiffness (1% Secant Modulus)--MD, MPa | 248 | 586 | 310 | 558 | 545 | 669 | 407 |
| Film Stiffness (1% Secant Modulus)--TD, MPa | 262 | 669 | 221 | 552 | 455 | 690 | 414 |
| Heat Resistance, °C | 121 | 154 | 132 | 121 | 154 | 143 | 132 |
| Elmendorf Tear - MD, gms | 7 | 20 | 247 | 23 | 22 | 23 | 13 |
| Elmendorf Tear - TD, gms | 565 | 618 | 685 | 1600 | 616 | 202 | 741 |
| Dart Impact, gms | 363 | 138 | 473 | 53 | 135 | 95 | 92 |
| Puncture Resistance, J/cm³ | 19.4 | 11.6 | 14.9 | 21.2 | 13.3 | 20.3 | 15.4 |
| Haze, % | 1.21 | 66.4 | 62.7 | 1.56 | 84.7 | 2.25 | 1.4 |
| Gloss, % | 81.5 | 8.8 | 8.0 | 78.2 | 4.4 | 79.3 | 82.5 |
| Clarity, % | 99.0 | 14.9 | 14.2 | 98.5 | 7.3 | 99.2 | 98.3 |

As demonstrated by the data in Table 4, the films of the invention, as shown in Example 1, provide an improved balance of properties relative to Comparative Examples 2-7.

Table 5 summarizes vapor transmission testing, and xylene and hexane solubles tests performed on the films of Example 1 and Comparative Examples 2, 4, 6, and 7.

| **Table 5** | | | | | |
|---|---|---|---|---|---|
| | **Example 1** | **Comp. Ex. 2** | **Comp. Ex. 4** | **Comp. Ex. 6** | **Comp Ex. 7** |
| Hexane Extractables, % | 1.88 | | | | |
| Xylene Solubles, % | 18.46 | | | | |
| WVTR (1 mil/25.4 µm film), gm/m²-day | 15.7 | 12.6 | 12.1 | 11.0 | 13.8 |
| OTR (1 mil/25.4 µm film), gm/m²-day | 5751 | 3698 | 3960 | 3316 | 3939 |
| CO2TR (mil/25.4 µm film), gm/m²-day | 31326 | 17740 | 17794 | 12533 | 20111 |

As shown in Table 5, the films of the invention possess low hexane extractables and xylene solubles, as well as improved vapor transmission properties relative to comparative examples 2, 4, 6 and 7.

The films of the invention also demonstrate good hot tack and heat seal strength. Hot tack is a measurement of the strength of seals immediately after a seal has been made and before it cools to ambient temperature. Heat seal strength is a measurement of the strength of heat seals performed after the seal has been conditioned.

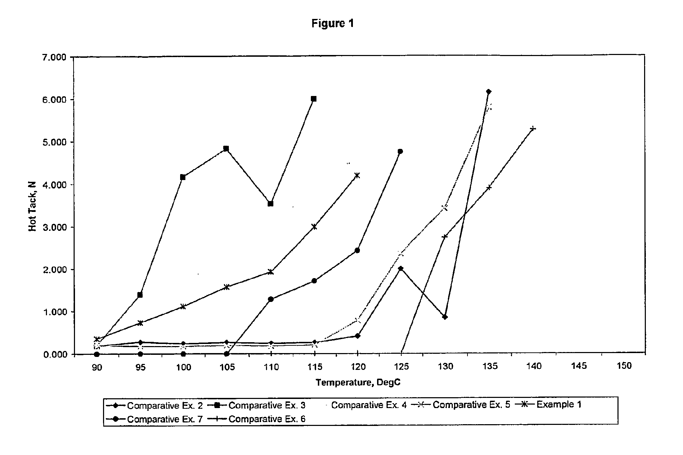

To measure hot tack, films of Example 1 and Comparative Examples 2-7 were tested using a JB/Topwave Hot tack tester according to a modified ASTM F1921-98 procedure. The instrument heat sealed each of the films and immediately measured the strength of the hot seal after conclusion of the sealing time. The seal pressure was 0.5 N/mm², with a seal time of 0.50 seconds, cooling time of 0.5 seconds, peel speed of 150 mm/s, and sample width 25 mm. The sealing was done over a range of temperatures. Figure 1 illustrates hot tack curves showing force requirements versus temperature for Example 1 and Comparative Examples 2-7. As shown in Figure 1, the film of the invention demonstrates improved hot tack characteristics over Comparative Example 2 and Comparative Examples 5-7.

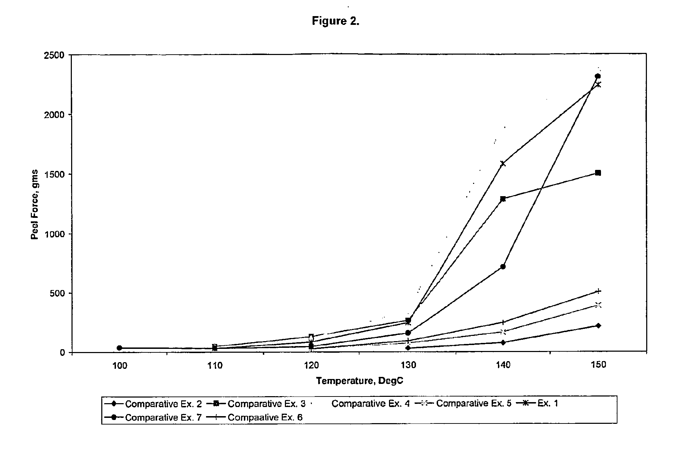

The heat seal strength of films of Example 1 and Comparative Examples 2-7 was measured by first conditioning the films for over 24 hours at 50% relative humidity and 23°C. Heat sealing was performed using a Sentinel heat sealer at 275 kPa, and 0.5 second dwell time. The force required to peal the seals apart was measured using an Instron 4400R commercially available from Instron Corporation. Film sample widths were 25.4 mm, and the testing was performed at a cross head speed of 30.5 cm/minutes. Figure 2 illustrates heat seal curves showing peel force versus temperature for Example 1 and Comparative Examples 2-7. As shown in Figure 2, the film of the invention demonstrates improved heat seal characteristics over Comparative Examples 2-3, and 5-6, and equal to better performance heat seal characteristics over Comparative Example 7.

## Claims

1. A propylene copolymer composition comprising
A) from 50% to 80% by weight of a propylene copolymer containing from 0.05 to 0.99% by weight of an alpha olefins having from 2 to 10 carbon atoms other than propylene; and
B) from 20% to 50% by weight of one propylene copolymer containing from 7.01 to 9.99% by weight of an alpha olefins having from 2 to 10 carbon atoms other than propylene;
said propylene copolymer composition having the following characteristics:
(i) MFR (230C/2,16 kg) comprised between 1 and 20 g/10 min;
(ii) tensile E modulus comprised between 400 and 800 MPa (ISO 527-2:1993).

2. The propylene copolymer composition as claimed in claim 1 having a melting point comprised between 143°C and 150°C.

3. The propylene copolymer composition as claimed in claim 1 having haze (ASTM D 1003) comprised between 25% and 40% without the adding of clarifying agents.

4. The propylene copolymer composition as claimed in claim 1, produced using a catalyst system comprising at least one metallocene compound of the formula (1), 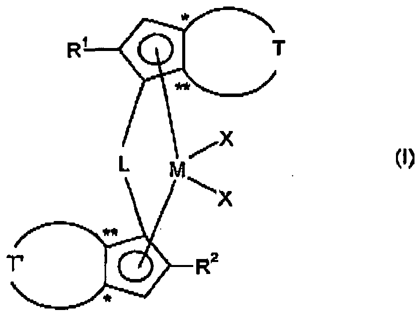 where
M is zirconium, hafnium or titanium,
X are identical or different and are each, independently of one another, hydrogen or halogen or an -R, -OR, -OSO₂CF₃, -OCOR, -SR, -NR₂ or - PR₂ group, where R is linear or branched C₁-C₂₀-alkyl, C₃-C₂₀-cycloalkyl which may be substituted by one or more C₁-C₁₀-alkyl radicals, C₆-C₂₀-aryl C₇-C₂₀-alkylaryl or C₇-C₂₀-arylalkyl and may contain one or more heteroatoms of groups 13-17 of the Periodic Table of the Elements or one or more unsaturated bonds, where the two radicals X may also be joined to one another,
L is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, vvhich may contain heteroatoms of groups 13-17 of the Periodic Table of the Elements, or a silylidene group having up to 5 silicon atoms, e.g. -SiMe₂-or -SiPh₂-,
R¹ is linear or branched C₁-C₂₀-alkyl, C₃-C₂₀-cycloakyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R¹ is preferably a linear or branched C₁-C₁₀-alkyl group which is unbranched in the α position, in particular a linear C₁-C₄-alkyl group such as methyl ethyl, n-propyl or n-butyl,
R² is a group of the formula -C(R³)₂R⁴, where
R³ are identical or different and are each, independently of one another, linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring,
R⁴ is hydrogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
T and T' are divalent groups of the formulae (II), (III), (IV), (V) or (VI), 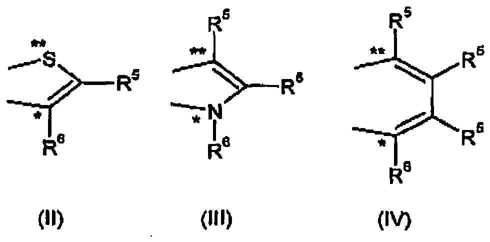 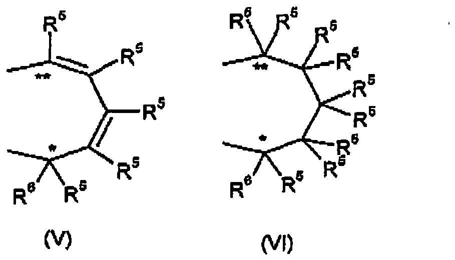
where
the atoms denoted by the symbols * and ** are joined to the atoms of the compound of the formula (I) which are denoted by the same symbol, and
R⁵ are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
R⁶ are identical or different and are each, independently of one another, halogen or a linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds.

5. The propylene copolymers compositions as claimed in claim 1, wherein the olefin other than propylene is exclusively ethylene.

6. The propylene copolymer composition as claimed in claim 1, wherein a molar mass distribution M_{w}/Mₙ is in the range from 1.5 to 3.5.

7. The propylene copolymer composition as claimed on claim 1, wherein the alpha olefin content of component B) is from 8.0% to 9.6% by weight.

8. The propylene polymer composition as claimed in claim 1, wherein the MFR is between 6 and 12 g/10min.

9. The propylene polymer composition as claimed in claim 1, wherein the tensile E modulus is between 550 and 750 MPa.

10. A process for producing fibers, films or molding which comprises utilizing the propylene copolymer composition of claim 1.

11. A film produced from a propylene copolymer composition comprising:
A) from 50% to 80% by weight of a propylene copolymer containing from about 0.05 to 0.99% by weight of alpha olefins having from 2 to 10 carbon atoms other than propylene; and
B) from 20% to 50% by weight of a propylene copolymers 9,99 containing from 7.01% to 9.99% by weight of alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of 400 to 800 MPa; and wherein
the films has a haze less than 10.0% and a dart impact greater than 150 gms for a 1 mil thickness of film.

12. The film according to claim 11 having a melting point of between 143°C to 150°C.

13. The film according to claim 11 where the film has a haze less than 5% for a 1 mil thickness of film.

14. The film according to claim 11 where the film has a dart impact of greater than 200 gm for a 1 mil thickness of film

15. The film according to claim 11 where the tensile E modulus of the propylene copolymer composition is from 550 to 750 MPa.

16. The film according to claim 11 where the film has a WVTR of greater than 11.6 gm/m2-day.

17. The film according to claim 11 where the film has a OTR greater than 3875 gm/m2-day.

18. The film according to claim 11 where the film has a CO2TR greater than 19,375 cc/m2-day.

19. The film according to claim 11 where the film has hexane extractables no greater than 2.6% and xylene soluble less than 30%.

20. The film according to claim 11 where the metallocene compound is of formula (I): 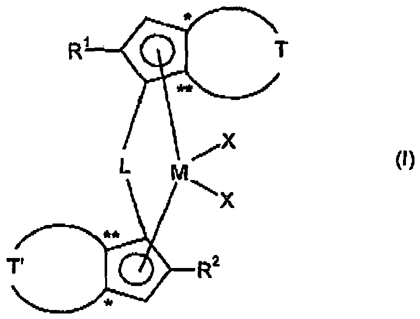 where
M is zirconium, hafnium or titanium,
X are identical or different and are each, independently of one another, hydrogen or halogen or an -R, -OR, -OSO₂CF₃, -COR, -SR, -NR₂ or - PR₂ group, where R is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where the two radicals X may also be joined to one another,
L is a divalent bridging group selected from the group consisting of C₁-C₂₀-alkylidene radicals, C₃-C₂₀-cycloalkylidene radicals, C₆-C₂₀-arylidene radicals, C₇-C₂₀-alkylarylidene radicals and C₇-C₂₀-arylalkylidene radicals, which may contain heteroatoms of groups 13-17 of the Periodic Table of the Elements, or a silylidene group having up to 5 silicon atoms, e.g. -SiMe₂-or -SiPh₂-,
R¹ is linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, where R¹ is preferably a linear or branched C₁-C₁₀-alkyl group which is unbranched in the α position, in particular a linear C₁-C₄-alkyl group such as methyl, ethyl, n-propyl or n-butyl,
R² is a group of the formula -C(R³)₂R⁴, where
R³ are identical or different and are each, independently of one another, linear or branched C₁-C₂₀-alkyl, C₃-C₂₀-cyloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds, or two radicals R³ may be joined to form a saturated or unsaturated C₃-C₂₀-ring,
R⁴ is hydrogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
T and T' are divalent groups of the formulae (II), (III), (IV), (V) or (VI), 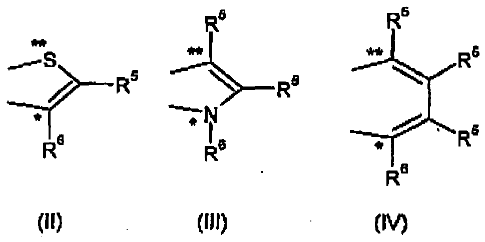 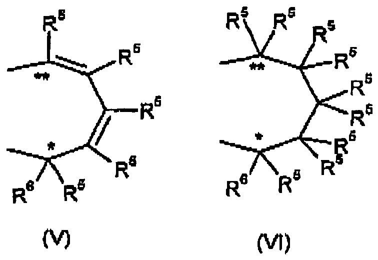
where
the atoms denoted by the symbols * and ** are joined to the atoms of the compound of the formula (I) which are denoted by the same symbol, and
R⁵ are identical or different and are each, independently of one another, hydrogen or halogen or linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds,
R⁶ are identical or different and are each, independently of one another, halogen or a linear or branched C₁-C₂₀-alkyl, C₃-C₂₀-cycloalkyl which may be substituted by one or more C₁-C₁₀-alkyl radicals, C₆-C₂₀-aryl, C₇-C₂₀-alkylaryl or C₇-C₂₀-arylalkyl and may contain one or more heteroatoms of groups 13-17 of the Periodic Table of the Elements or one or more unsaturated bonds.

21. The film according to claim 11 where the MFR is from 6 to 12.

22. An article comprising at least one layer of a film produced from a propylene copolymer composition comprising:
A) from about 50% to about 80% by weight of a propylene copolymer containing from 0.05 to 0.99% by weight of an alpha olefins having from 2 to 10 carbon atoms other than propylene; and
B) from 20% to 50% by weight of a propylene copolymer containing from 7.01 to 9.99% by weight of an alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of from 400 to 800 MPa; and
wherein the film has a haze less than 10.0% and a dart impact greater than 150 gms for a 1 mil thickness of film.

23. A laminate comprising at least one layer of a polyolefin film and at least one layer of a film produced from a propylene copolymer composition comprising:
A) from 50% to 80% by weight of a propylene copolymer containing from 0.05 to 0.99% by weight of an alpha olefins having from 2 to 10 carbon atoms other than propylene; and
B) from 20% to 50% by weight of a propylene copolymer containing from 7.01 to 9.99% by weight of an alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of 400 to 800 MPa; and wherein
the film has a haze less than 10.0% and a dart impact greater than 150 gms for a 1 mil thickness of film.

24. A coated article comprising a substrate and a film produced from a propylene copolymer composition comprising:
A) from 50% to 80% by weight of a propylene copolymer containing from 0.05 to 0.99% by weight of an alpha olefins having from 2 to 10 carbon atoms other than propylene; and
B) from 20% to 50% by weight of a propylene copolymer containing from 7.01 to 9.99 % by weight of an alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of 400 to 800 MPa; and wherein
the film has a haze less than 10.0% and a dart impact greater than 150 gms for a 1 mil thickness of film, wherein the film has been coated onto the substrate.

25. A co-extruded multilayer film comprising at least one layer of a film produced from a propylene copolymer composition comprising:
A) from 50% to 80% by weight of a propylene copolymer containing from 0.05 to 0.99% by weight of an alpha olefins having from 2 to 10 carbon atoms other than propylene; and
B) from 20% to 50% by weight of a propylene copolymer containing from 7.01 to 9.99% by weight of an alpha olefins having from 2 to 10 carbon atoms other than propylene;
wherein components A) and B) are obtained using a catalyst system based on metallocene compounds, and the propylene copolymer composition has an MFR of from 1 to 20 and a tensile E modulus of 400 to 800 MPa; and wherein
the film has a haze less than 10.0% and a dart impact greater than about 150 gms for a I mil thickness of film.

26. The process of claim 10 for producing moldings.

27. The process of claim 26 wherein the moldings are large hollow bodies.

## Patentansprüche

1. Propylen-Copolymer-Zusammensetzung, bestehend aus:
A) von 50 bis 80 Gew.-% eines Propylen-Copolymers, das von 0,05 bis 0,99 Gew.-% eines α-Olefins mit von 2 bis 10 Kohlenstoffatomen ausgenommen Propylen enthält; und
B) von 20 bis 50 Gew.-% eines Propylen-Copolymers, das von 7,01 bis 9,99 Gew.-% eines α-Olefins mit von 2 bis 10 Kohlenstoffatomen ausgenommen Propylen enthält;
wobei die Propylen-Copolymer-Zusammensetzung die folgenden Merkmale aufweist:
(i) eine MFR (230 °C/2,16 kg), die zwischen 1 und 20 g/10 min liegt,
(ii) einen Zug-E-Modul, der zwischen 400 und 800 MPa liegt (ISO 527-2:1993).

2. Propylen-Copolymer-Zusammensetzung nach Anspruch 1 mit einem Schmelzpunkt, der zwischen 143 °C und 150 °C liegt.

3. Propylen-Copolymer-Zusammensetzung nach Anspruch 1 mit einer Trübung (ASTM D 1003), die ohne Zufügen von Klärmitteln zwischen 25 und 40 % liegt.

4. Propylen-Copolymer-Zusammensetzung nach Anspruch 1, die mittels eines Katalysatorsystems hergestellt wird, das mindestens eine Metallocenverbindung der Formel (I) umfasst, 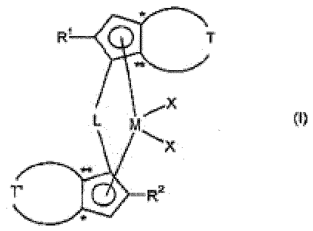 wobei
M Zirconium, Hafnium oder Titan ist,
X identisch oder verschieden sind und jeweils, unabhängig voneinander, Wasserstoff oder Halogen oder eine -R-, -OR-, -OSO₂CF₃-, -OCOR-, -SR-, -NR₂- oder - PR₂-Gruppe sind, wobei R lineares oder verzweigtes C₁-bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können, wobei die beiden Reste X auch miteinander verbunden sein können,
L eine divalente brückenbildende Gruppe ist, die aus der Gruppe ausgewählt ist, bestehend aus C₁- bis C₂₀-Alkylidenresten, C₃- bis C₂₀-Cycloalkylidenresten, C₆-bis C₂₀-Arylidenresten, C₇-bis C₂₀-Alkylarylidenresten und C₇- bis C₂₀-Arylalkylidenresten, die Heteroatome der Gruppen 13 bis 17 des Periodensystems der Elemente oder eine Silylidengruppe mit bis zu 5 Siliciumatomen, z. B. -SiMe₂- oder -SiPh₂- enthalten können,
R¹ lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl ist und ein oder mehr Heteroatom(e) aus den Gruppen 13 bis 17 des Periodensystems der Elemente oder eine oder mehr ungesättigte Bindung(en) enthalten kann, wobei R¹ bevorzugt eine lineare oder verzweigte C₁- bis C₁₀-Alkylgruppe ist, die in der α-Position unverzweigt, insbesondere eine lineare C₁- bis C₄-Alkylgruppe, wie zum Beispiel Methyl, Ethyl, n-Propyl oder n-Butyl ist,
R² eine Gruppe der Formel -C(R³)₂R⁴ ist, wobei
R³ identisch oder verschieden sind und jeweils, unabhängig voneinander, lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können, oder zwei R³-Reste zur Bildung eines gesättigten oder ungesättigten C₃- bis C₂₀-Rings miteinander verbunden sein können,
R⁴ Wasserstoff oder lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl ist und ein oder mehr Heteroatom(e) aus den Gruppen 13 bis 17 des Periodensystems der Elemente oder eine oder mehr ungesättigte Bindung(en) enthalten kann,
T und T' divalente Gruppen der Formeln (II), (III), (IV), (V) oder (VI) sind, 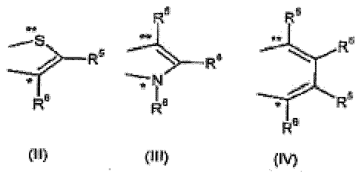 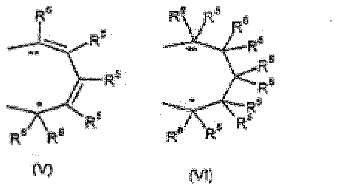
wobei
die durch die Zeichen * und ** gekennzeichneten Atome mit den durch das gleiche Zeichen gekennzeichneten Atome der Verbindung der Formel (I) verbunden sind, und
R⁵ identisch oder verschieden sind und jeweils, unabhängig voneinander, Wasserstoff oder Halogen oder lineares oder verzweigtes C₁- bis C₂₀-Alkyl, C₃-bis C₂ₒ-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können,
R⁶ identisch oder verschieden sind und jeweils, unabhängig voneinander, Halogen oder ein lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können.

5. Propylen-Copolymer-Zusammensetzung nach Anspruch 1, wobei das Olefin ausgenommen Propylen ausschließlich Ethylen ist.

6. Propylen-Copolymer-Zusammensetzung nach Anspruch 1, wobei eine Molmasenverteilung M_{w}/Mₙ im Bereich von 1,5 bis 3,5 liegt.

7. Propylen-Copolymer-Zusammensetzung nach Anspruch 1, wobei der
α-Olefingehalt von Komponente B) von 8,0 bis 9,6 Gew.-% beträgt.

8. Propylen-Polymer-Zusammensetzung nach Anspruch 1, wobei die MFR zwischen 6 und 12 g/10min liegt.

9. Propylen-Polymer-Zusammensetzung nach Anspruch 1, wobei der Zug-E-Modul zwischen 550 und 750 MPa liegt.

10. Verfahren zur Herstellung von Fasern, Folien oder Formteilen, das die Verwendung der Propylen-Copolymer-Zusammensetzung nach Anspruch 1 umfasst.

11. Aus einer Propylen-Copolymer-Zusammensetzung hergestellte Folie, bestehend aus:
A) von 50 bis 80 Gew.-% eines Propylen-Copolymers, das von 0,05 bis 0,99 Gew.-% α-Olefine mit von 2 bis 10 Kohlenstoffatomen ausgenommen Propylen enthält; und
B) von 20 bis 50 Gew.-% eines Propylen-Copolymers, das von 7,01 bis 9,99 Gew.-% α-Olefine mit von 2 bis 10 Kohlenstoffatomen ausgenommen Propylen enthält;
wobei die Komponenten A) und B) mittels eines auf Metallocenverbindungen basierenden Katalysatorsystems erhalten werden, und die Propylen-Copolymer-Zusammensetzung eine MFR von 1 bis 20 und einen Zug-E-Modul von 400 bis 800 MPa aufweist; und wobei
die Folie eine Trübung von weniger als 10,0% und einen Fallbolzenschlagwert größer als 150 g für eine Folie mit einer Dicke von 1 mil (Milli-Inch) aufweist.

12. Folie nach Anspruch 11 mit einem Schmelzpunkt zwischen 143 und 150 °C.

13. Folie nach Anspruch 11, wobei die Folie eine Trübung von weniger als 5 % für eine Folie mit einer Dicke von 1 mil aufweist.

14. Folie nach Anspruch 11, wobei die Folie einen Fallbolzenschlagwert von größer als 200 g für eine Folie mit einer Dicke von 1 mil aufweist.

15. Folie nach Anspruch 11, wobei der Zug-E-Modul der Propylen-Copolymer-Zusammensetzung von 550 bis 750 MPa beträgt.

16. Folie nach Anspruch 11, wobei die Folie eine WVTR von größer als 11,6 g/m²·Tag aufweist.

17. Folie nach Anspruch 11, wobei die Folie eine OTR von größer als 3875 g/m²·Tag aufweist.

18. Folie nach Anspruch 11, wobei die Folie eine CO₂TR von größer als 19,375 cm³/m²·Tag aufweist.

19. Folie nach Anspruch 11, wobei die Folie mit Hexan extrahierbare Stoffe von nicht mehr als 2,6 % und in Xylen lösliche Stoffe von weniger als 30 % aufweist.

20. Folie nach Anspruch 11, wobei die Metallocenverbindung von der Formel (I) ist: 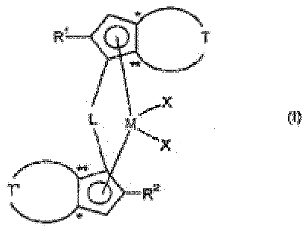 wobei
M Zirconium, Hafnium oder Titan ist,
X identisch oder verschieden sind und jeweils, unabhängig voneinander, Wasserstoff oder Halogen oder eine -R-, -OR-, -OSO₂CF₃-, -OCOR-, -SR-, -NR₂- oder -PR₂-Gruppe sind, wobei R lineares oder verzweigtes C₁-bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können, wobei die beiden Reste X auch miteinander verbunden sein können,
L eine divalente brückenbildende Gruppe ist, die aus der Gruppe ausgewählt ist, bestehend aus C₁- bis C₂₀-Alkylidenresten, C₃- bis C₂₀-Cycloalkylidenresten, C₆-bis C₂₀-Arylidenresten, C₇- bis C₂₀-Alkylarylidenresten und C₇- bis C₂₀-Arylalkylidenresten, die Heteroatome aus den Gruppen 13 bis 17 des Periodensystems der Elemente oder eine Silylidengruppe mit bis zu 5 Siliciumatomen, z. B. -SiMe₂- oder -SiPh₂- enthalten können,
R¹ lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl ist und ein oder mehr Heteroatom(e) aus den Gruppen 13 bis 17 des Periodensystems der Elemente oder eine oder mehr ungesättigte Bindung(en) enthalten kann, wobei R¹ bevorzugt eine lineare oder verzweigte C₁- bis C₁₀-Alkylgruppe ist, die in der α-Position unverzweigt, insbesondere eine lineare C₁- bis C₄-Alkylgruppe, wie zum Beispiel Methyl, Ethyl, n-Propyl oder n-Butyl ist,
R² eine Gruppe der Formel -C(R³)₂R⁴ ist, wobei
R³ identisch oder verschieden sind und jeweils, unabhängig voneinander, lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können, oder zwei R³-Reste zur Bildung eines gesättigten oder ungesättigten C₃- bis C₂₀-Rings miteinander verbunden sein können,
R⁴ Wasserstoff oder lineares oder verzweigtes C₁- bis C₂₀-Alkyl, C₃- bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl ist und ein oder mehr Heteroatom(e) aus den Gruppen 13 bis 17 des Periodensystems der Elemente oder eine oder mehr ungesättigte Bindung(en) enthalten kann,
T und T' divalente Gruppen der Formeln (II), (III), (IV), (V) oder (VI) sind, 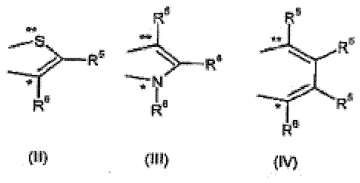 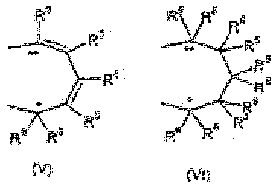
wobei
die durch die Zeichen * und ** gekennzeichneten Atome mit den durch das gleiche Zeichen gekennzeichneten Atome der Verbindung der Formel (I) verbunden sind, und
R⁵ identisch oder verschieden sind und jeweils, unabhängig voneinander, Wasserstoff oder Halogen oder lineares oder verzweigtes C₁- bis C₂₀-Alkyl, C₃-bis C₂₀-Cycloalkyl, das durch einen oder mehr C₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können,
R⁶ identisch oder verschieden sind und jeweils, unabhängig voneinander, Halogen oder ein lineares oder verzweigtes G₁- bis C₂₀-Alkyl, C₃- bis G₂₀-Gycloalkyl, das durch einen oder mehr G₁- bis C₁₀-Alkylrest(e) substituiert sein kann, C₆- bis C₂₀-Aryl, C₇- bis C₂₀-Alkylaryl oder C₇- bis C₂₀-Arylalkyl sind und ein oder mehr Heteroatom(e) aus den Gruppen 13 bis 17 des Periodensystems der Elemente oder eine oder mehr ungesättigte Bindung(en) enthalten können.

21. Folie nach Anspruch 11, wobei die MFR von 6 bis 12 beträgt.

22. Artikel, der mindestens eine Schicht einer Folie umfasst, die aus einer Propylen-Copolymer-Zusammensetzung hergestellt ist, bestehend aus:
A) von ca. 50 bis ca. 80 Gew.-% eines Propylen-Copolymers, das von 0,05 bis 0,99 Gew.-% eines α-Olefins mit von 2 bis 10 Kohlenstoffatomen ausgenommen Propylen enthält; und
B) von 20 bis 50 Gew.-% eines Propylen-Copolymers, das von 7,01 bis 9.99 Gew.-% eines α-Olefins mit von 2 bis 10 Kohlenstoffatomen ausgenommen Propylen enthält;
wobei die Komponenten A) und B) unter Verwendung eines auf Metallocenverbindungen basierenden Katalysatorsystems erhalten werden, und die Propylen-Copolymer-Zusammensetzung eine MFR von 1 bis 20 und einen Zug-E-Modul von 400 bis 800 MPa aufweist; und
wobei die Folie eine Trübung von weniger als 10,0 % und einen Fallbolzenschlagwert größer als 150 g für eine Folie mit einer Dicke von 1 mil aufweist.

23. Laminat, das mindestens eine Schicht aus einer Polyolefinfolie und mindestens eine Schicht einer aus einer Propylen-Copolymer-Zusammensetzung hergestellten Folie umfasst, bestehend aus:
A) von 50 bis 80 Gew.-% eines Propylen-Copolymers, das mindestens von 0,05 bis 0,99 Gew.-% eines α-Olefins mit von 2 bis 10 Kohlenstoffatomen ausgenommen Propylen enthält; und
B) von 20 bis 50 Gew.-% eines Propylen-Copolymers, das von 7,01 bis 9,99 Gew.-% eines α-Olefins mit von 2 bis 10 Kohlenstoffatomen ausgenommen Propylen enthält;
wobei die Komponenten A) und B) mittels eines auf Metallocenverbindungen basierenden Katalysatorsystems erhalten werden, und die Propylen-Copolymer-Zusammensetzung eine MFR von 1 bis 20 und einen Zug-E-Modul von 400 bis 800 MPa aufweist; und
wobei die Folie eine Trübung von weniger als 10,0 % und einen Fallbolzenschlagwert von größer als 150 g für eine Folie mit einer Dicke von 1 mil aufweist.

24. Beschichteter Artikel, der ein Substrat und eine aus einer Propylen-Copolymer-Zusammensetzung hergestellte Folie umfasst, bestehend aus:
A) von 50 bis 80 Gew.-% eines Propylen-Copolymers, das von 0,05 bis 0,99 Gew.-% eines α-Olefins mit von 2 bis 10 Kohlenstoffatomen ausgenommen Propylen enthält; und
B) von 20 bis 50 Gew.-% eines Propylen-Copolymers, das von 7,01 bis 9,99 Gew.-% eines α-Olefins mit von 2 bis 10 Kohlenstoffatomen ausgenommen Propylen enthält;
wobei die Komponenten A) und B) mittels eines auf Metallocenverbindungen basierenden Katalysatorsystems erhalten werden, und die Propylen-Copolymer-Zusammensetzung eine MFR von 1 bis 20 und einen Zug-E-Modul von 400 bis 800 MPa aufweist; und wobei
die Folie eine Trübung von weniger als 10,0 % und einen Fallbolzenschlagwert von größer als 150 g für eine Folie mit einer Dicke von 1 mil aufweist, wobei die Folie auf das Substrat geschichtet wurde.

25. Coextrudierte Mehrschichtfolie, die mindestens eine Schicht einer aus einer Propylen-Copolymer-Zusammensetzung hergestellten Folie umfasst, bestehend aus:
A) von 50 bis 80 Gew.-% eines Propylen-Copolymers, das von 0,05 bis 0,99 Gew.-% eines α-Olefins mit von 2 bis 10 Kohlenstoffatomen ausgenommen Propylen enthält; und
B) von 20 bis 50 Gew.-% eines Propylen-Copolymers, das von 7,01 bis 9,99 Gew.-% eines α-Olefins mit von 2 bis 10 Kohlenstoffatomen ausgenommen Propylen enthält;
wobei die Komponenten A) und B) mittels eines auf Metallocenverbindungen basierenden Katalysatorsystems erhalten werden, und die Propylen-Copolymer-Zusammensetzung eine MFR von 1 bis 20 und einen Zug-E-Modul von 400 bis 800 MPa aufweist; und wobei
die Folie eine Trübung von weniger als 10,0 % und einen Fallbolzenschlagwert von größer als 150 g für eine Folie mit einer Dicke von 1 mil aufweist.

26. Verfahren nach Anspruch 10 zur Herstellung von Formteilen.

27. Verfahren nach Anspruch 26, wobei die Formteile große Hohlkörper sind.

## Revendications

1. Composition de copolymère de propylène, comprenant :
A) 50% à 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01 à 9,99% en poids d'alpha-oléfines comprenant 2 à 10 atomes de carbone autres que le propylène ;
ladite composition de copolymère de propylène présentant les caractéristiques suivantes :
(i) MFR (melt flow rate - indice de fluidité à chaud en masse) (230°C/2,16 kg) compris entre 1 et 20 g/10 min ;
(ii) module de traction E compris entre 400 et 800 MPa (ISO 527-2: 1993).

2. Composition de copolymère de propylène selon la revendication 1, présentant un point de fusion compris entre 143°C et 150°C.

3. Composition de copolymère de propylène selon la revendication 1, présentant un voile (ASTM D 1003) compris entre 25% et 40% sans addition d'agents de clarification.

4. Composition de copolymère de propylène selon la revendication 1, produite en utilisant un système catalytique comprenant au moins un composé de type métallocène de formule (I), 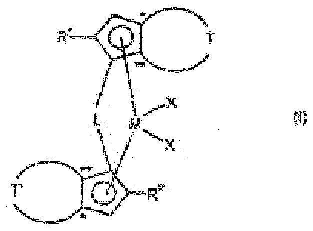 où
M représente zirconium, hafnium ou titane ;
X sont identiques ou différents et représentent chacun, indépendamment l'un de l'autre, hydrogène ou halogène ou un groupe -R, -OR, -OSO₂CF₃, -OCOR, -SR, -NR₂ ou - PR₂, R représentant C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et pouvant contenir un ou plusieurs hétéroatomes des groupes 13-17 du tableau périodique des éléments ou une ou plusieurs liaisons insaturées, les deux radicaux X pouvant également être liés l'un à l'autre,
L représente un groupe formant un pont divalent choisi dans le groupe constitué par les radicaux C₁-C₂₀-alkylidène, les radicaux C₃-C₂₀-cycloalkylidène, les radicaux C₆-C₂₀-arylidène, les radicaux C₇-C₂₀-alkylarylidène et les radicaux C₇-C₂₀-arylalkylidène, qui peut contenir des hétéroatomes des groupes 13-17 du tableau périodique des éléments, ou un groupe silylidène présentant jusqu'à 5 atomes de silicium, par exemple -SiMe₂- ou -SiPh₂-,
R¹ représente C₁-C₂₀-alkyle, linéaire ou ramifié, C₃-C₂₀-cycloalkyle qui peut être substitué par un ou plusieurs radicaux C₁-C₁₀-alkyle ; C₆-C₂₀-aryle, C₇-C₂₀- alkylaryle ou C₇-C₂₀-arylalkyle et peut contenir un ou plusieurs hétéroatomes des groupes 13-17 du tableau périodique des éléments ou une ou plusieurs liaisons insaturées,
R¹ représentant de préférence un groupe C₁-C₁₀-alkyle linéaire ou ramifié qui est non ramifié en position α, en particulier un groupe C₁-C₄-alkyle linéaire tel que méthyle, éthyle, n-propyle ou n-butyle,
R² représente un groupe de formule -C(R³)₂R⁴, où
R³ sont identiques ou différents et représentent chacun, indépendamment l'un de l'autre, C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées, ou deux radicaux R³ peuvent être liés pour former un cycle en C₃-C₂₀ saturé ou insaturé,
R⁴ représente hydrogène ou C₁-C₂₀-alkyle, linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peut contenir un ou plusieurs hétéroatomes des groupes 13-17 du tableau périodique des éléments ou une ou plusieurs liaisons insaturées,
T et T' représentent des groupes divalents de formules (II), (III), (IV), (V) ou (VI), 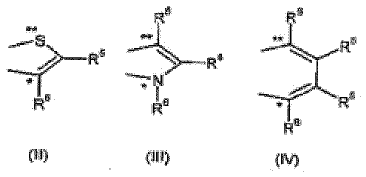 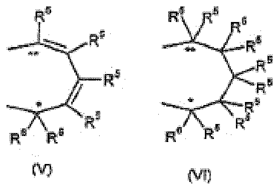
où
les atomes désignés par les symboles * et ** sont liés aux atomes du composé de formule (I) qui sont désignés par le même symbole, et
R⁵ sont identiques ou différents et représentent chacun, indépendamment les uns des autres, hydrogène ou halogène ou C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées,
R⁶ sont identiques ou différents et représentent chacun, indépendamment les uns des autres, halogène ou C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées.

5. Composition de copolymère de propylène selon la revendication 1, l'oléfine autre que le propylène étant exclusivement de l'éthylène.

6. Composition de copolymère de propylène selon la revendication 1, la distribution des masses molaires M_{w}/Mₙ étant dans la plage de 1,5 à 3,5.

7. Composition de copolymère de propylène selon la revendication 1, la teneur en alpha-oléfine du composant B) valant 8,0% à 9,6% en poids.

8. Composition de polymère de propylène selon la revendication 1, le MFR valant entre 6 et 12 g/10 min.

9. Composition de polymère de propylène selon la revendication 1, le module de traction E valant entre 550 et 750 MPa.

10. Procédé pour la production de fibres, de films ou d'objets moulés qui comprend l'utilisation de la composition de copolymère de propylène selon la revendication 1.

11. Film produit à partir de la composition de copolymère de propylène comprenant :
A) 50% à 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01% à 9,99% en poids d'alpha-oléfines comprenant 2 à 10 atomes de carbone autres que le propylène ;
les composants A) et B) étant obtenus en utilisant un système catalytique à base de composés de type métallocène et la composition de copolymère de propylène présentant un MFR de 1 à 20 et un module de traction E de 400 à 800 MPa ; et le film présentant un voile inférieur à 10,0% et une résistance à la perforation supérieure à 150 g pour une épaisseur de film de 1 millième de pouce (25,4 µm).

12. Film selon la revendication 11, présentant un point de fusion entre 143°C et 150°C.

13. Film selon la revendication 11, le film présentant un voile inférieur à 5% pour une épaisseur de film de 1 millième de pouce (25,4 µm).

14. Film selon la revendication 11, le film présentant une résistance à la perforation supérieure à 200 g pour une épaisseur de film de 1 millième de pouce (25,4 µm).

15. Film selon la revendication 11, le module de traction E de la composition de copolymère de propylène valant de 550 à 750 MPa.

16. Film selon la revendication 11, le film présentant un WVTR (water vapor transmission rate - taux de transmission de la vapeur d'eau) supérieur à 11,6 g/m².jour.

17. Film selon la revendication 11, le film présentant un OTR (oxygen transmission rate - taux de transmission de l'oxygène) supérieur à 3875 g/m².jour.

18. Film selon la revendication 11, le film présentant un CO2TR (CO₂ transmission rate - taux de transmission du CO₂) supérieur à 19,375 cc/m².jour.

19. Film selon la revendication 11, le film présentant des fractions pouvant être extraites à l'hexane pas supérieures à 2,6% et des fractions solubles dans le xylène inférieures à 30%.

20. Film selon la revendication 11, le composé de type métallocène étant de formule (I) : 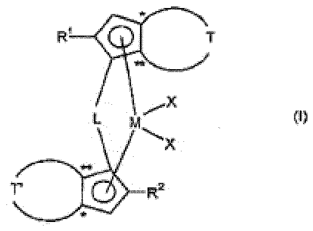 où
M représente zirconium, hafnium ou titane ;
X sont identiques ou différents et représentent chacun, indépendamment l'un de l'autre, hydrogène ou halogène ou un groupe -R, -OR, -OSO₂CF₃, -OCOR, -SR, -NR₂ ou - PR₂, R représentant C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et pouvant contenir un ou plusieurs hétéroatomes des groupes 13-17 du tableau périodique des éléments ou une ou plusieurs liaisons insaturées, les deux radicaux X pouvant également être liés l'un à l'autre,
L représente un groupe formant un pont divalent choisi dans le groupe constitué par les radicaux C₁-C₂₀-alkylidène, les radicaux C₃-C₂₀-cycloalkylidène, les radicaux C₆-C₂₀-arylidène, les radicaux C₇-C₂₀-alkylarylidène et les radicaux C₇-C₂₀-arylalkylidène, qui peut contenir des hétéroatomes des groupes 13-17 du tableau périodique des éléments, ou un groupe silylidène présentant jusqu'à 5 atomes de silicium, par exemple -SiMe₂- ou -SiPh₂-,
R¹ représente C₁-C₂₀-alkyle, linéaire ou ramifié, C₃-C₂₀-cycloalkyle qui peut être substitué par un ou plusieurs radicaux C₁-C₁₀-alkyle ; C₆-C₂₀-aryle, C₇-C₂₀- alkylaryle ou C₇-C₂₀-arylalkyle et peut contenir un ou plusieurs hétéroatomes des groupes 13-17 du tableau périodique des éléments ou une ou plusieurs liaisons insaturées,
R¹ représentant de préférence un groupe C₁-C₁₀-alkyle linéaire ou ramifié qui est non ramifié en position α, en particulier un groupe C₁-C₄-alkyle linéaire tel que méthyle, éthyle, n-propyle ou n-butyle,
R² représente un groupe de formule -C(R³)₂R⁴, où
R³ sont identiques ou différents et représentent chacun, indépendamment l'un de l'autre, C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées, ou deux radicaux R³ peuvent être liés pour former un cycle en C₃-C₂₀ saturé ou insaturé,
R⁴ représente hydrogène ou C₁-C₂₀-alkyle, linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peut contenir un ou plusieurs hétéroatomes des groupes 13-17 du tableau périodique des éléments ou une ou plusieurs liaisons insaturées,
T et T' représentent des groupes divalents de formules (II), (III), (IV), (V) ou (VI), 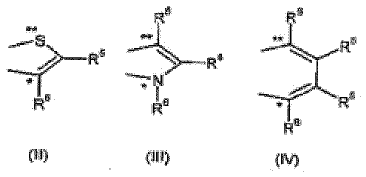 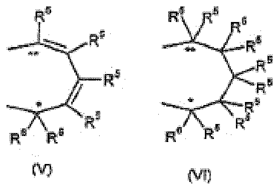
où
les atomes désignés par les symboles * et ** sont liés aux atomes du composé de formule (I) qui sont désignés par le même symbole, et
R⁵ sont identiques ou différents et représentent chacun, indépendamment les uns des autres, hydrogène ou halogène ou C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées,
R⁶ sont identiques ou différents et représentent chacun, indépendamment les uns des autres, halogène ou C₁-C₂₀-alkyle linéaire ou ramifié, C₃-C₂₀-cycloalkyle qui peut être substitué par un ou plusieurs radicaux C₁-C₁₀-alkyle ; C₆-C₂₀-aryle, C₇-C₂₀-alkylaryle ou C₇-C₂₀-arylalkyle et peuvent contenir un ou plusieurs hétéroatomes des groupes 13-17 du tableau périodique des éléments ou une ou plusieurs liaisons insaturées.

21. Film selon la revendication 11, le MFR valant 6 à 12.

22. Objet comprenant au moins une couche d'un film produit à partir d'une composition de copolymère de propylène comprenant :
A) d'environ 50% à environ 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01 % à 9,99% en poids d'alpha-oléfines comprenant 2 à 10 atomes de carbone autres que le propylène ;
les composants A) et B) étant obtenus en utilisant un système catalytique à base de composés de type métallocène et la composition de copolymère de propylène présentant un MFR de 1 à 20 et un module de traction E de 400 à 800 MPa ; et
le film présentant un voile inférieur à 10,0% et une résistance à la perforation supérieure à 150 g pour une épaisseur de film de 1 millième de pouce (25,4 µm).

23. Stratifié comprenant au moins une couche d'un film de polyoléfine et au moins une couche d'un film produit à partir d'une composition de copolymère de propylène comprenant :
A) 50% à 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01% à 9,99% en poids d'alpha-oléfines comprenant 2 à 10 atomes de carbone autres que le propylène ;
les composants A) et B) étant obtenus en utilisant un système catalytique à base de composés de type métallocène et la composition de copolymère de propylène présentant un MFR de 1 à 20 et un module de traction E de 400 à 800 MPa ; et
le film présentant un voile inférieur à 10,0% et une résistance à la perforation supérieure à 150 g pour une épaisseur de film de 1 millième de pouce (25,4 µm).

24. Objet revêtu comprenant un substrat et un film produit à partir d'une composition de copolymère de propylène comprenant :
A) 50% à 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01% à 9,99% en poids d'alpha-oléfines comprenant 2 à 10 atomes de carbone autres que le propylène ;
les composants A) et B) étant obtenus en utilisant un système catalytique à base de composés de type métallocène et la composition de copolymère de propylène présentant un MFR de 1 à 20 et un module de traction E de 400 à 800 MPa ; et
le film présentant un voile inférieur à 10,0% et une résistance à la perforation supérieure à 150 g pour une épaisseur de film de 1 millième de pouce (25,4 µm), le film ayant été revêtu sur le substrat.

25. Film multicouche coextrudé comprenant au moins une couche d'un film produit à partir d'une composition de copolymère de propylène comprenant :
A) 50% à 80% en poids d'un copolymère de propylène contenant 0,05 à 0,99% en poids d'alpha-oléfines comprenant 2 à 10 atomes de carbone autres que le propylène ; et
B) 20% à 50% en poids d'un copolymère de propylène contenant 7,01% à 9,99% en poids d'alpha-oléfines comprenant 2 à 10 atomes de carbone autres que le propylène ;
les composants A) et B) étant obtenus en utilisant un système catalytique à base de composés de type métallocène et la composition de copolymère de propylène présentant un MFR de 1 à 20 et un module de traction E de 400 à 800 MPa ; et
le film présentant un voile inférieur à 10,0% et une résistance à la perforation supérieure à 150 g pour une épaisseur de film de 1 millième de pouce (25,4 pm).

26. Procédé selon la revendication 10 pour produire des objets moulés.

27. Procédé selon la revendication 26, les objets moulés étant de grands corps creux.
